# EUROPEAN PATENT APPLICATION

(11) **EP 2 555 530 A1**
(43) Date of publication of application: **06.02.2013**
(21) Application number: 11762169.8
(22) Date of filing: 16.03.2011
(51) Int. Cl.: H04N 13/04, G02B 27/22, G09G 5/36

(54) **VIDEO PROCESSING DEVICE**

(30) Priority: 29.03.2010 JP 2010074926
(71) Applicant: Panasonic Corporation, Kadoma-shi Osaka 571-8501 (JP)
(72) Inventor: KAWAGUCHI, Toru, Osaka-shi, Osaka 540-6207 (JP); SHINOHARA, Hiroki, Osaka-shi, Osaka 540-6207 (JP)
(74) Representative: Grünecker, Kinkeldey, Stockmair & Schwanhäusser
(86) International application number: PCT/JP2011/001544
(87) International publication number: WO 2011/121916

(57) **Abstract**

To provide a video processing device capable of seamlessly displaying 3D videos and 2D videos contained in a broadcasted 3D program. A video processing device for outputting a 2D video and a 3D video includes a reception unit receiving a video stream containing video frames, the video frames including 2D video frames for a 2D video and/or 3D video frames for a 3D video; a program judgment unit judging whether the video stream received by the reception unit contains a 2D program or a 3D program; and an output unit, when the program judgment unit judges that the video stream contains the 3D program, outputting the 2D video frames contained therein in a 3D video output format, and when the program judgment unit judges that the video stream contains the 2D program, outputting the 2D video frames contained therein in a 2D video output format.

## Description

### [Technical Field]

The present invention relates to an art of displaying 2D videos and 3D videos.

### [Background Art]

With the recent increase in 3D stereoscopic videos in movie theaters and so on, there arises a demand for broadcasting of 3D video programs in digital TVs and so on.

Here, Patent Literature 1 discloses an art of playing back and displaying stereoscopic videos.

According to the Patent Literature 1, judgment is made as to whether a video constituted by frames is a 3D video stored in the side-by-side format. If the video is judged to a 3D video, a video for left eye and a video for right eye are generated from the frames, and the generated videos for left eye and right eye are displayed sequentially. This realizes stereoscopic display. Here, the side-by-side format is a format in which one frame is divided left and right, and a video for left eye and a video for right eye that are necessary for stereoscopic viewing are stored in respective two divided regions. This art allows viewers to view 3D videos.

### [Citation List]

### [Patent Literature]

[Patent Literature 1] Japanese Patent No. 3,789,794

### [Summary of Invention]

### [Technical Problem]

By the way, there is a case where, during a time slot of a program containing 3D videos, 3D videos that constitute the main feature of the program and 2D videos such as a commercial message inserted into the program are both broadcasted. In other words, when a program is broadcasted, a stream is transmitted, which is constituted by video frames that include video frames for a 3D video (hereinafter, referred to as "3D video frames") and/or frames for a 2D video (hereinafter, referred to as "2D video frames"). In this way, a program that is at least partially constituted by a 3D video is hereinafter referred to as a "3D program", and a program that is entirely constituted by 2D videos is hereinafter referred to as a "2D program".

In order to perform 2D video display, videos are each generally displayed every 1/60 sec on a plasma TV or the like. In order to perform 3D video display compared with this, alternate display of videos for left eye and videos for right eye allows viewers to view the videos as one stereoscopic video. Accordingly, in order to realize viewing of these videos as one stereoscopic video every 1/60 sec, it is necessary to alternately display videos for left eye and videos for right eye every 1/120 sec.

Here, in the case where the art disclosed in the Patent Literature 1 is used to watch a 3D program, judgment is made as to whether a video is a 3D video for each of frames contained in a broadcasted stream. Accordingly, when a stream containing a 3D program, which contains both 2D video frames and 3D video frames, is received, switching occurs between the video output cycles each time a video to be displayed switches between 2D videos and 3D videos.

As a result, for a time period from when switching between the video output cycles starts to when the switching completes, no video is output, and accordingly no video is displayed for this time period. This causes a problem that the viewers cannot enjoy enough videos of the broadcasted 3D program.

In view of the above problem, the present invention aims to provide a video processing device, a video processing method, and a video processing program that are capable of seamlessly displaying 2D videos and 3D videos contained in a broadcasted 3D program.

### [Solution to Problem]

In order to achieve the above aim, the present invention provides a video processing device comprising: a reception unit operable to receive a video stream that contains video frames, the video frames including 2D video frames for a 2D video and/or 3D video frames for a 3D video; a program judgment unit operable to make a judgment as to whether the video stream received by the reception unit contains a 2D program that is entirely constituted by 2D videos or a 3D program that is at least partially constituted by a 3D video; and an output unit operable, when the program judgment unit judges that the video stream contains the 3D program, to output the 2D video frames contained therein in a 3D video output format for 3D videos, and when the program judgment unit judges that the video stream contains the 2D program, to output the 2D video frames contained therein in a 2D video output format for 2D videos.

### [Advantageous Effects of Invention]

With this structure, when receiving 2D video frames contained in a 3D program, the video processing device outputs the received 2D video frames in the 3D video output format. Accordingly, it is unnecessary to switch between the 2D video output format and the 3D video output format. Since this does not delay display of 2D videos and 3D videos constituting the 3D program, the video processing device can seamlessly display the 3D videos and the 2D videos constituting the 3D program. Accordingly, a viewer can enjoy enough broadcasting of the 3D program.

Here, the reception unit may further receive additional information that is associated with the video stream and indicates whether the video stream contains the 2D program or the 3D program, and the program judgment unit may make the judgment based on the additional information.

With this structure, the video processing device can easily judge whether a received video stream contains a 2D program or a 3D program, with use of additional information associated with the video stream.

Here, if a predetermined number of 3D video frames are successively received, the program judgment unit may judge that the video stream contains the 3D program, and if the predetermined number of 3D video frames are not successively received, the program judgment unit may judge that video stream contains the 2D program.

With this structure, the video processing device can easily judge whether a received video stream contains a 2D program or a 3D program, by judging whether the predetermined number of 3D video frames are successively received.

Here, if channel switching occurs while the output unit outputs the video frames in the 3D video output format and then the predetermined number of 2D video frames are successively received, the program judgment unit may judge to switch from the 3D video output format to the 2D video output format, and the output unit may switch from the 3D video output format to the 2D video output format.

With this structure, if successively receiving the predetermined number of 2D video frames immediately after channel switching occurs, the video processing device switches from the 3D video output format to the 2D video output format. Accordingly, the video processing device can detect that the viewer has ended watching the 3D program, based on a user operation.

Here, each of the video frames may contain an identifier for identifying whether the video frame is a 2D video frame or a 3D video frame, the video processing device may further comprise a frame judgment unit operable to judge whether each of the video frames is a 2D video frame or a 3D video frame based on the identifier contained therein, and if the program judgment unit judges that the video stream contains the 3D program and the frame judgment unit judges that each of the video frames contained therein is a 2D video frame, the output unit may output the 2D video frame in the 3D video output format.

With this structure, the video processing device judges whether each of received frames is a 2D video frame or a 3D video frame, with use of an identifier contained in the frame. Accordingly, the video processing device can precisely make the judgment.

Here, the video processing device may further comprise a storage unit that stores therein an electronic program guide in which 3D programs each have program information added thereto for identifying the 3D program, and the program judgment unit may identify a channel on which the video stream has been broadcasted, and make the judgment based on the identified channel, a current time, and the electronic program guide.

With this structure, the video processing device can easily judge whether a received video stream contains a 2D program or a 3D program, with use of the electronic program guide.

Here, in the electronic program guide, broadcast stations for broadcasting only 3D programs may each have broadcast information added thereto for identifying that the broadcast station is a broadcast station for broadcasting only 3D programs before making the judgment, the program judgment unit may judge whether a broadcast station that has received the video stream on the identified channel is a broadcast station for broadcasting only 3D programs based on broadcast information added to the broadcast station, and if the program judgment unit judges that the broadcast station is a broadcast station for broadcasting only 3D programs, the output unit may output the 2D video frames contained in the 3D program in the 3D video output format.

With this structure, the video processing device can judge whether a broadcast station that has received a video stream is a broadcast station for broadcasting only 3D programs, before judging whether the received video stream contains a 2D program or a 3D program.

Here, if the program judgment unit detects an ending time of the 3D program based on the electronic program guide while the output unit outputs the video frames contained therein in the 3D video output format, the program judgment unit may judge whether a program subsequent to the 3D program is a 2D program or a 3D program, and if the program judgment unit judges that the subsequent program is a 3D program, the output unit may output a received 2D video frame in the 3D video output format continuously after the ending time of the 3D program without switching to the 2D video output format, and if the program judgment unit judges that the subsequent program is a 2D program, the output unit may switch from the 3D video output format to the 2D video output format after the ending time of the 3D program, and output the 2D video frame in the 2D video output format.

With this structure, the video processing device can easily detect a timing of switching from a 3D program to a 2D program, with use of the electronic program guide.

Here, an output cycle of the 3D video output format may be half an output cycle of the 2D video output format, and the output unit may output each of the 2D video frames twice successively in each output cycle of the 3D video output format.

With this structure, the video processing device outputs each of 2D video frames twice successively in the output cycle of the 3D video output format. Generally, since an image for left eye and an image for right eye are output alternately to form one stereoscopic image for a 3D video, the output cycle of the 3D video output format is half the output cycle of the 2D video output format. Each of the 2D video frames is output twice successively in the output cycle of the 3D video output format. This allows transition of 2D videos in the output cycle of the 3D video output format in the same way as in the output cycle of the 2D video output format. This allows the viewer to view even a 3D program that contains 2D videos, without feeling uncomfortable.

Here, an output cycle of the 3D video output format may be half an output cycle of the 2D video output format, and the video processing device may further comprise a video processing unit operable, when two 2D video frames are successively received, to generate an interpolation video frame from the two 2D video frames, as an intermediate video frame between the two 2D video frames, and the output unit may successively output a preceding one of the two 2D video frames, the generated interpolation video frame, and a subsequent one of the two 2D video frames in this order in the output cycle of the 3D video output format.

With this structure, the video processing device successively outputs a 2D video and a generated interpolation video in the output cycle of the 3D video output format. This achieves smooth transition of 2D videos in the output cycle of the 3D video output format. Generally, since an image for left eye and an image for right eye are output alternately to form one stereoscopic image for a 3D video, the output cycle of the 3D video output format is half the output cycle of the 2D video output format. Accordingly, by outputting, between two successive 2D videos, an interpolation video that is an intermediate video between the two successive 2D videos, smooth transition of the videos can be achieved.

### [Brief Description of Drawings]

FIG. 1 shows a use state of a digital TV (video processing device) 100.
FIG. 2 shows an example of displaying a stereoscopic image.
FIG. 3 shows an example of video display in a side-by-side format.
FIG. 4 shows an example of the structure of frames for stereoscopic viewing.
FIG. 5 is a block diagram showing the structure of the digital TV 100.
FIG. 6 shows an example of the data structure of a PMT (Program Map Table) T100.
FIG. 7 is a block diagram showing the structure of an output processing unit 105.
FIG. 8 is a flow chart showing operations of buffer switching processing.
FIG. 9 is a flow chart showing operations of buffer writing processing.
FIG. 10 shows a specific example of displaying 3D videos and 2D videos contained in a 3D program contained in a received video stream.
FIG. 11 shows a specific example of a mechanism for displaying 2D videos contained in a 3D program.
FIG. 12 shows a use state of a digital TV (video processing device) 1100.
FIG. 13 is a block diagram showing the structure of an STB (Set Top Box) 1200.
FIG. 14 is a block diagram showing the structure of the digital TV 1100.
FIG. 15 is a flow chart showing operations of output processing.
FIG. 16 is a block diagram showing the structure of an STB 1200a.
FIG. 17 is a block diagram showing the structure of an output processing unit 1205a.
FIG. 18 is a block diagram showing the structure of a digital TV 2100.
FIG. 19 is a block diagram showing the structure of a digital TV 2100a.
FIG. 20 is a block diagram showing the structure of a digital TV 3100.
FIG. 21 is a block diagram showing the structure of a digital TV 4100.
FIG. 22 is a flow chart showing operations of program judgment processing.
FIG. 23 shows an example of the data structure of an SDT (Service Descriptor Table) T300.
FIG. 24 shows a specific example of a mechanism for 2D video display with use of an interpolation image.
FIG. 25 is a block diagram showing the structure of a digital TV 100A that includes a graphics generation unit 110A.

### [Description of Embodiments]

### 1. First Embodiment

The following describes a video processing device relating to the present embodiment, with reference to the drawings.

### 1.1 Stereoscopic Viewing

Firstly, the following simply describes the principle of stereoscopic viewing. Stereoscopic viewing is realized by a method using holography and a method using parallax images.

Firstly, according to the method using holography, a stereoscopic image of an object is reproduced, in such a manner that a viewer perceives the reproduced stereoscopic image as three-dimensional in the same way as the viewer perceives the actual object as three-dimensional. Although a technical theory for generating videos for holography has already been established, there are almost no practical commercial examples. This is because it is extremely difficult to generate videos for holography with conventional holography. Such video generation requires a computer capable of performing an enormous amount of operations to generate videos for hologram of the video in real time and a display device having a high resolution enough to draw thousands of lines in each distance of 1 mm.

Secondly, the method using parallax images is described. Generally, due to a difference in position between left eye and right eye of a viewer, there occurs a slight difference between an image perceived by the left eye and an image perceived by the right eye. This difference is used to allow the viewer to perceive an image with both the left eye and right eye as three-dimensional. According to this method using parallax images, the viewer perceives a planar image as if it were three-dimensional due to the parallax images.

This method has a merit of realizing stereoscopic viewing merely by preparing videos for right eye and videos for left eye. Focusing on how to make the videos for left eye and the videos for right eye only visible to the right eye and the left eye, respectively, some of arts have already been practically implemented. One of such arts is sequential segregation.

According to the sequential segregation, videos for left eye and videos for right eye are alternately displayed in the time axis direction. The viewer superimposes the videos for left eye and the videos for right eye over each other within the viewer's brain due to the afterimage effect. Accordingly, the viewer perceives a pair of a left scene and a right scene as a stereoscopic video.

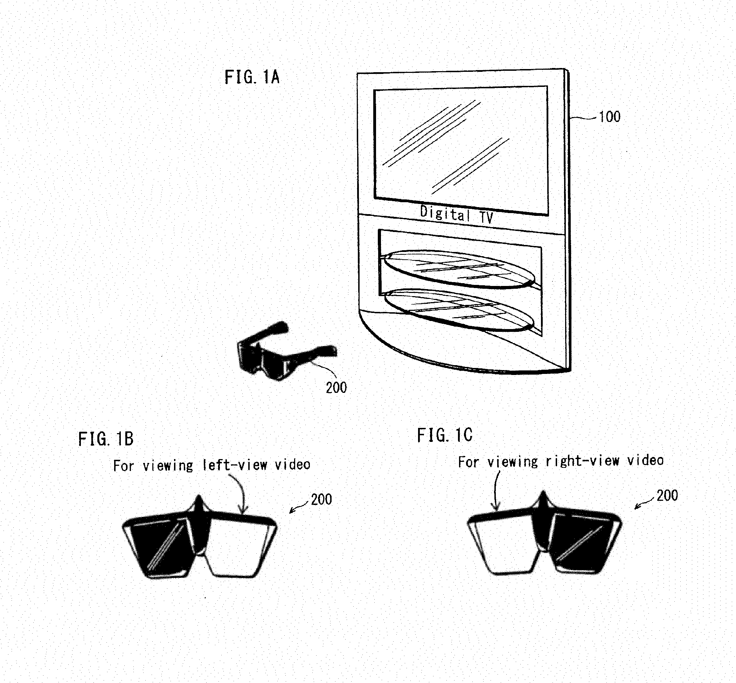

The video processing device relating to the present embodiment is a TV for viewing 3D videos. FIG. 1A shows a use state of the video processing device. As shown in FIG. 1A, a digital TV 100 is used by a viewer wearing 3D glasses 200.

The digital TV 100 is capable of displaying 2D videos and 3D videos. The digital TV 100 display videos by playing back a stream contained in a received broadcast wave.

The digital TV 100 relating to the present embodiment requires a viewer to wear the 3D glasses 200 in order to realize stereoscopic viewing. The 3D glasses 200 are equipped with liquid-crystal shutters that enable the viewer to view a parallax image by the sequential segregation. The parallax image is an image which is composed of a pair of an image visible to only the viewer's right eye and an image visible to only the viewer's left eye, such that respective pictures corresponding to the right eye and the left eye are visible to the respective eyes, thereby realizing the stereoscopic viewing. FIG. 1B shows a state of the 3D glasses 200 while an image for right eye is displayed. At the instant when an image for left eye is displayed on a screen, the 3D glasses 200 cause the liquid-crystal shutter for left eye to be light-transmissive, and cause the liquid-crystal shutter for right eye to be light-blocking. FIG. 1C shows a state of the 3D glasses 200 while an image for right eye is displayed. At the instant when an image for right eye is displayed on the screen, the 3D glasses 200 cause the liquid-crystal shutter for right eye to be light-transmissive, and cause the liquid-crystal shutter for left eye to be light-blocking, on the contrary.

This completes the use state of the video processing device.

Next, description is given on parallax images for use in stereoscopic viewing.

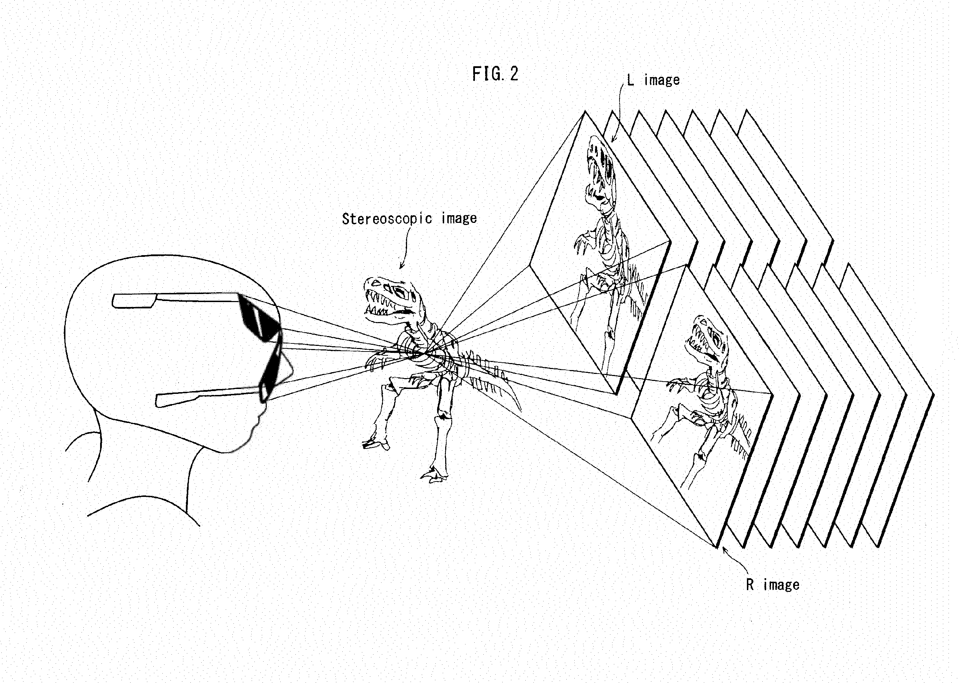

The method using parallax images is a method for realizing stereoscopic viewing by preparing images for right eye and images for left eye and causing respective pictures corresponding to the right eye and the left eye to be visible to the respective eyes. FIG. 2 shows the viewer's head on the left side and respective images of a dinosaur skeleton seen with the left eye and the right eye of the viewer on the right side. Light-transmission and light-blocking are repeated alternately for the shutter for left eye and the shutter for right eye. As a result, the viewer superimposes a left scene and a right scene over each other within the viewer's brain due to the afterimage effect, and perceives a stereoscopic video appearing in front of the viewer.

The parallax images are each composed of an image visible to the left eye, which is referred to as "left-eye image (L image)", and an image visible to the right eye, which is referred to as "right-eye image (R image)". Furthermore, a video constituted by pictures that are each an L image is referred to as "left-view video", and a video constituted by pictures that are each an R image is referred to as "right-view video".

As a 3D format in which a left-view video and a right-view video are synthesized into one picture and compression-coding is performed on the picture, there are used a frame compatible format and a service compatible format.

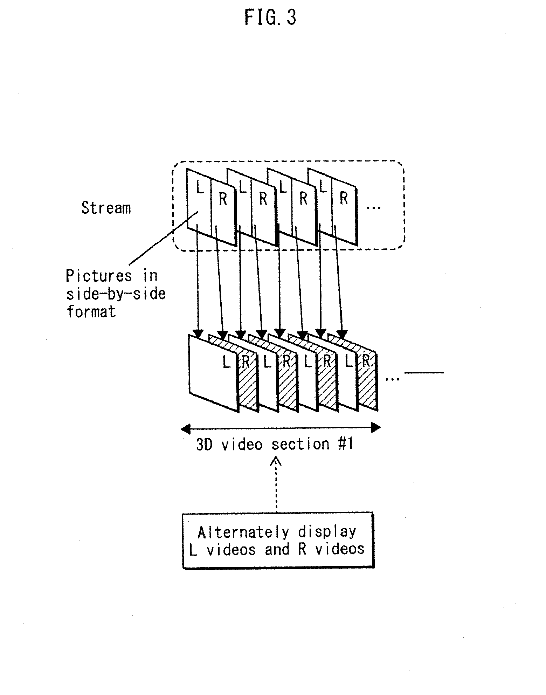

Firstly, according to the frame compatible format, respective pictures corresponding to a left-view video and a right-view video are thinned or zoomed out, and then synthesized into one picture, and compression coding is performed on the picture in accordance with a general video compression-coding system. An example of the frame compatible format is the side-by-side format such as shown in FIG. 3. According to the side-by-side format, respective pictures corresponding to a left-view video and a right-view video are horizontally compressed by 1/2, and the compressed pictures arranged side by side are synthesized into one picture. A video constituted by synthesized pictures is compression-coded to be a stream in accordance with the general video compression-coding system. On the other hand, the stream is decoded to be videos for playback in accordance with the general video compression-coding system. Pictures of the decoded video are each divided into a left image and a right image, and the left image and the right image are horizontally extended twice as long, thereby obtaining respective pictures corresponding to the left-view video and the right-view video. The pictures (L images) corresponding to the left-view video and the pictures (R images) corresponding to the right-view video are alternately displayed, thereby obtaining stereoscopic images such as shown in FIG. 2. In addition to the side-by-side format, the frame-compatible format includes the top-and-bottom format in which an L image and an R image are arranged vertically, the line alternative format in which L images and R images are arranged alternately for each line within each picture, and the like.

Next, the service compatible format is described. According to the service compatible format, a left-view video stream and a right-view video stream are used, which are obtained by digitizing a left-view video and a right-view video and compression-coding the digitized left-view video and right-view video, respectively.

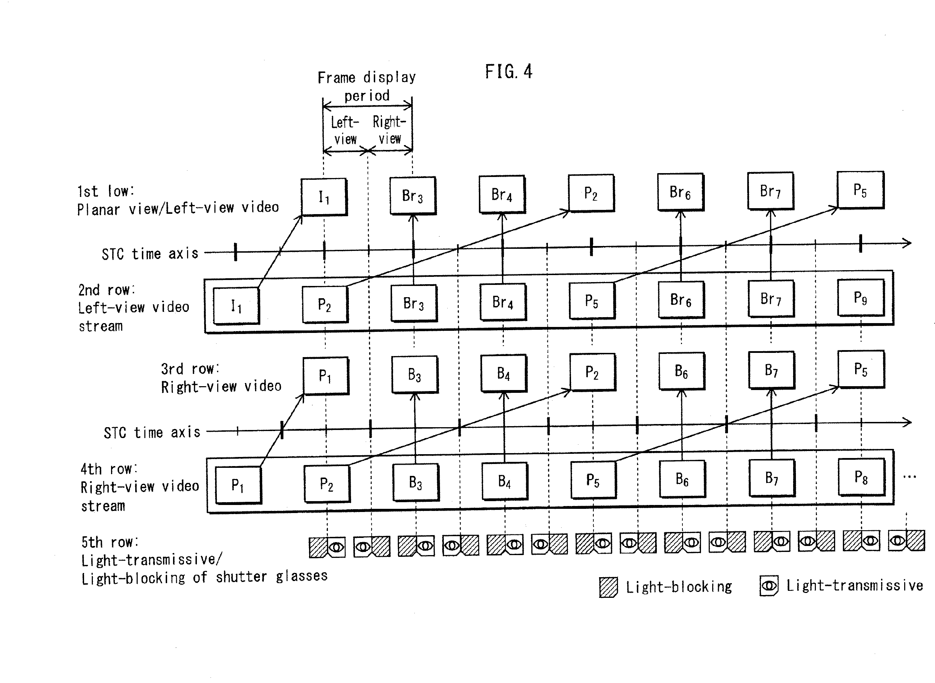

FIG. 4 shows an example of the internal structure of a left-view video stream and a right-view video stream for realizing stereoscopic viewing in the service compatible format.

The second row in FIG. 4 shows the internal structure of the left-view video stream. This stream contains picture data I1, P2, Br3, Br4, P5, Br6, Br7, and P9. The picture data is decoded in accordance with the DTS (Decode Time Stamps). The first row in FIG. 4 shows an L image. The L image is played back by playing back the decoded picture data I1, P2, Br3, Br4, P5, Br6, Br7, and P9, in the order of I1, Br3, Br4, P2, Br6, Br7, and P5 in accordance with the PTS. In FIG. 4, a picture on which intra-picture predictive coding is performed without referring to a reference picture is referred to as an "I-picture". It should be noted that a "picture" is a unit of coding, and denotes both of a frame and a field. A picture on which inter-picture predictive coding is performed referring to a picture that has already been processed is referred to as a "P-picture". A picture on which inter-picture predictive coding is performed simultaneously referring to two pictures that have already been processed is referred to as a "B-picture". A picture included in B-pictures that is referred to for performing inter-picture predictive coding on other picture is referred to as a "Br-picture".

The fourth row in FIG. 4 shows the internal structure of the right-view video stream. This stream contains picture data P1, P2, B3, B4, P5, B6, B7, and P8. The picture data is decoded in accordance with the DTS. The third row in FIG. 4 shows an R image. The R image is played back by playing back the decoded picture data P1, P2, B3, B4, P5, B6, B7, and P8, in the order of P1, B3, B4, P2, B6, B7, and P5 in accordance with the PTS. Note that, according to the stereoscopic playback in the sequential segregation, display of either one of an L image and an R image in pair is delayed by a time period equal to half the PTS interval.

The fifth row in FIG. 4 shows how the state of the 3D glasses 200 is changed. As shown in the fifth row, while the viewer is viewing the L image, the 3D glasses 200 closes a shutter for right eye, and while the viewer is viewing the R image, the 3D glasses 200 closes the shutter for left eye.

In addition to the compression using the inter-picture predictive coding that makes use of correlation property in the time direction, compression is performed on the left-view video stream and the right-view video stream using inter-picture predictive coding that makes use of inter-viewpoint correlation property. The pictures contained in the right-view video stream are compressed by referencing to respective pictures contained in the left-view video stream with the same display time.

For example, the first P-picture of the right-view video stream refers to an I-picture of the left-view video stream, a B-picture of the right-view video stream refers to a Br-picture of the left-view video stream, and the second P-picture of the right-view video stream refers to a P-picture of the left-view video stream.

Any of the compression-coded left-view video stream and right-view video stream, which can be decoded independently, is referred to as a "base-view video stream". Any of the compression-coded left-view video stream and right-view video stream, which has been compression-coded based on the inter-frame correlation property with respect to picture data contained in the base-view video stream and can be decoded only after the base-view video stream has been decoded, is referred to as a "dependent-view video stream". The base-view video stream and the dependent-view video stream may be stored and/or transferred as separate streams. Alternatively, the base-view video stream and the dependent-view video stream may be multiplexed with the same stream such as an MPEG2-TS stream.

### 1.2 Structure

Here, description is given on the structure of a digital TV 100 as an example of a video processing device that switches its screen between 2D and 3D.

The digital TV 100 is specifically a plasma TV, and receives a digital broadcast wave (stream) containing 2D videos and 3D videos. Also, the digital TV 100 is connected with the IP network and a playback device, and displays 2D videos and 3D videos output from the IP network and the playback device.

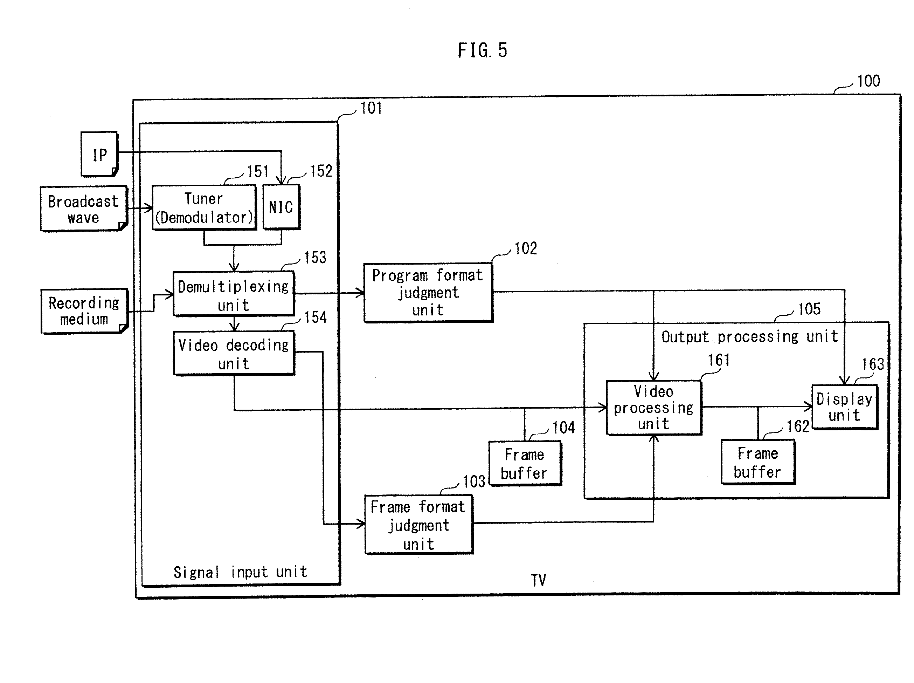

As shown in FIG. 5, the digital TV 100 includes a signal input unit 101, a program format judgment unit 102, a frame format judgment unit 103, a frame buffer 104, and an output processing unit 105.

### (1) Signal Input Unit 101

The signal input unit 101 receives a stream that contains 2D video frames and/or 3D video frames, which have been transmitted (output) from an external device. This stream is obtained by multiplexing a video stream that contains the 2D video frames and/or the 3D video frames with PSI (Program Specific Information). In addition, the stream is obtained by further multiplexing with an audio stream, a subtitle stream, and a multimedia stream such as BML, as necessary. The PSI contains information relating to programs contained in the multiplexed streams.

Here, the 3D video frames which have been transmitted (output) are in a 3D format such as the side-by-side format. The side-by-side format is a format in which a video for left eye (hereinafter, referred also to as "L video") and a video for right eye (hereinafter, referred also to as "R video") are contained in one frame, as described above.

Also, according to the present embodiment, frames that has been transmitted (output) are in a signal format compliant with the H.264|MPEG4/AVC standard. The signal format contains information stored in the SEI (Supplemental Enhancement Information) format, which indicates whether each of the frames is a 2D video frame or a 3D video frame. If indicating that the frame is a 3D video frame, the information further indicates which one of 3D formats including the side-by-side format the frame is in. This information is hereinafter referred to as "3D video information".

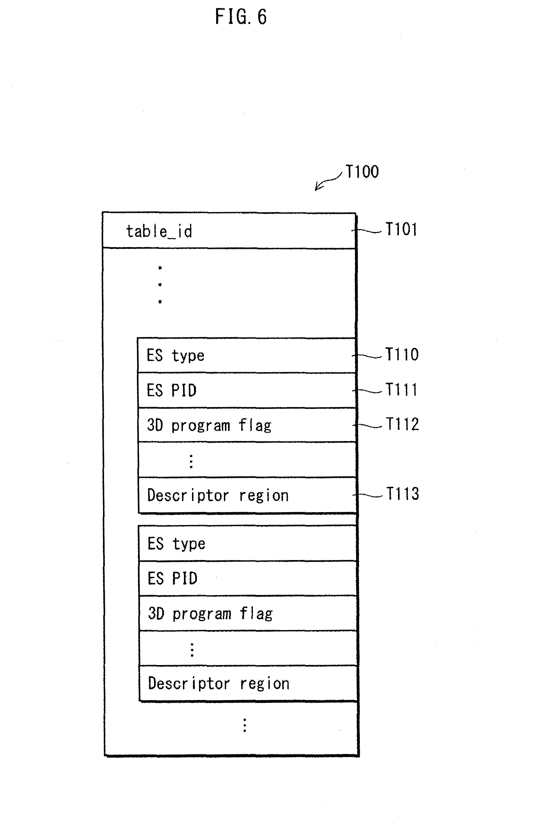

Here, an example of the data structure of the PSI is shown. According to the present embodiment, a PMT (Program Map Table) is used as the PSI. As shown in FIG. 6, the PMT contains a table identifier (table_id) T101, ES types T110, ES PIDs T111 3D program flags T112, and descriptor regions T113. Here, the PMT T100 contains a plurality of combinations each composed of the ES type T110, the ES PID T111, the 3D program flag T112, and the descriptor region T113. Since the table identifier (table_id) T101, the ES type T110, the ES PID T111, and the descriptor region T113 are known, description thereof is omitted here. The 3D program flag T112 is a flag for identifying whether a program contained in a stream corresponding to the PMT is a 2D program or a 3D program. Specifically, the 3D program flag is one-bit information, and has a value "0" indicating a 2D program and a value "1" indicating a 3D program.

The signal input unit 101 includes, as shown in FIG. 5, a tuner (demodulator) 151, an NIC (Network Interface Card) 152, a demultiplexing unit 153, and a video decoding unit 154.

The tuner 151 receives a digital broadcast wave (stream), and demodulates signals contained in the received digital broadcast wave.

The NIC 152 is connected with the IP network, and receives a stream that has been output from an external device.

The demultiplexing unit 153 demultiplexes the received stream into a video stream, which contains 2D video frames and/or 3D video frames, and PSI. Then, the demultiplexing unit 153 outputs the demultiplexed video stream and PSI to the video decoding unit 154 and the program format judgment unit 102, respectively. Also, the demultiplexing unit 153 reads a stream from a recording medium, in addition to an input from the tuner 151, the NIC 152, and so on.

Upon receiving the video stream that contains the 2D video frames and/or the 3D video frames from the demultiplexing unit 153, the video decoding unit 154 decodes the received video stream, and also extracts 3D video information stored in the video stream in units of frames. The video decoding unit 154 generates videos in units of frames. In this case, the 3D video frames are in the side-by-side format, and each frame has not been divided into an L image and an R image.

The video decoding unit 154 writes the generated videos in units of frames into the frame buffer 104, and outputs the extracted 3D video information in units of frames to the frame format judgment unit 103.

### (2) Program Format Judgment Unit 102

Upon receiving the PSI from the demultiplexing unit 153, the program format judgment unit 102 judges whether a program contained in the stream received from the demultiplexing unit 153 is a 2D program or a 3D program, based on a value of a 3D program flag contained in the received PSI.

### (3) Frame Format Judgment Unit 103

Upon receiving the 3D video information from the video decoding unit 154, the frame format judgment unit 103 judges whether the decoded frames are each a 2D video frame or a 3D video frame based on the received 3D video information. If judging that the frame is a 3D video frame, the frame format judgment unit 103 further judges which one of 3D formats including the side-by-side format the frame is in, based on the 3D video information.

### (4) Frame Buffer 104

The frame buffer 104 has a region for storing frames decoded by the video decoding unit 154.

### (5) Output Processing Unit 105

The output processing unit 105 outputs videos in an output cycle based on a result of judgment made by the program format judgment unit 102.

The output processing unit 105 includes, as shown in FIG. 5, a video processing unit 161, a frame buffer 162, and a display unit 163.

### (5-1) Frame Buffer 162

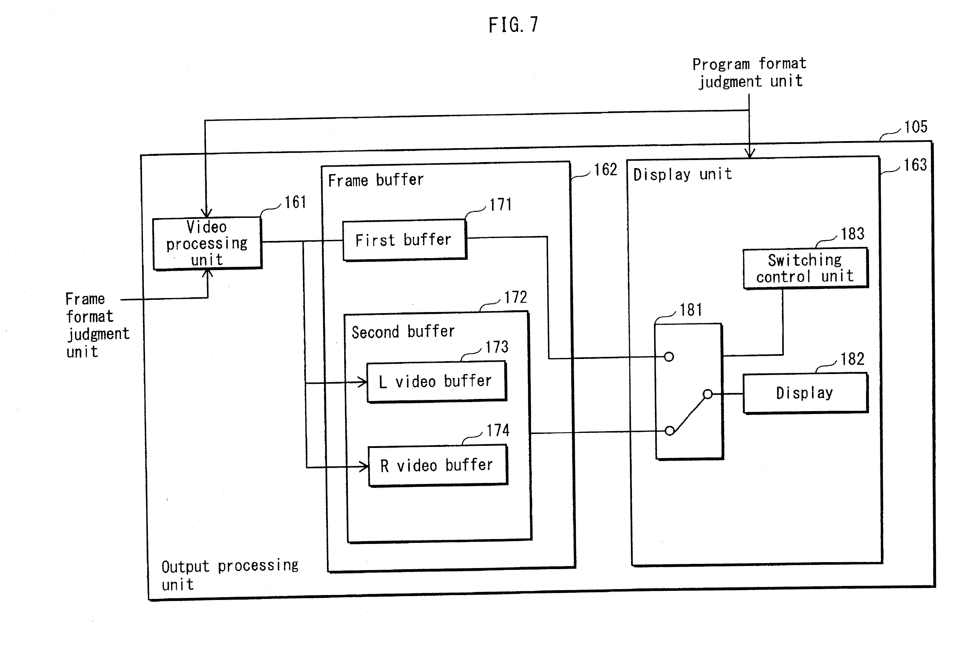

The frame buffer 162 includes, as shown in FIG. 7, a first buffer 171 and a second buffer 172.

The first buffer 171 stores therein frames contained in a stream constituting a 2D program.

The second buffer 172 includes an L video buffer 173 and an R video buffer 174, and stores therein frames contained in a stream constituting a 3D program.

### (5-2) Video Processing Unit 161

The video processing unit 161 judges whether frames, which are processing targets, are each a 2D video frame or a 3D video frame, based on a result of judgment made by the frame format judgment unit 103. If judging that the target frame is a 3D video frame, the video processing unit 161 further judges which one of 3D formats including the side-by-side format the frame is in, based on a result of judgment made by the frame format judgment unit 103.

If judging that the target frame is a 3D video frame, the video processing unit 161 divides the frame into two videos and expands the divided videos to generate an L video and an R video. Specifically, if judging that the frame is in the side-by-side format, the video processing unit 161 laterally expands the divided right and left videos to obtain an L video and an R video. Also, if judging that the frame is in the top-and-bottom format, the video processing unit 161 vertically expands the videos divided up and down to obtain an L video and an R video. The video processing unit 161 writes the generated L videos and R videos into the L video buffer 173 and the R video buffer 174, respectively.

If judging that the target frame is not a 3D video frame, that is, the target frame is a 2D video frame, the video processing unit 161 further judges whether the frame is contained in a 2D program or a 3D program.

If judging that the frame is contained in a 2D program, the video processing unit 161 stores the frame (videos) into the first buffer 171. If judging that the frame is contained in a 3D program, the video processing unit 161 stores the frame (video) into both the L video buffer 173 and the R video buffer 174.

### (5-3) Display Unit 163

The display unit 163 includes, as shown in FIG. 7, a switch 181, a display 182, and a switching control unit 183.

The switch 181 switches a connection destination of the display unit 163 between the first buffer 171 and the second buffer 172.

The switching control unit 183 controls switching of the connection destination between the buffers, based on a result of judgment made by the program format judgment unit 102. Specifically, if the program format judgment unit 102 judges that a program contained in a received video stream is a 3D program, the switching control unit 183 controls the switch 181 to switch the connection destination to the second buffer 172. If the program format judgment unit 101 judges that the program contained in the received video stream is a 2D program, the switching control unit 183 controls the switch 181 to switch the connection destination to the first buffer 171.

The display 182 switches a display cycle of videos based on a result of judgment made by the program format judgment unit 102 to perform video display. For example, if a program contained in a received video stream is a 2D program, the display 182 sets the display cycle to 60 Hz, reads 2D videos, which are display targets, from the first buffer 171 that is the connection destination of the switch 181, and displays the read 2D videos. If the program contained in the received video stream is a 3D program, the display 182 sets the display cycle to 120 Hz, reads videos, which are display targets, alternately from the L video buffer 173 and the R video buffer 174 of the second buffer 172 that is the connection destination of the switch 181, and displays the read videos.

Note that in the case where the viewer selects 2D viewing of even 3D videos (display of 3D videos in the side-by-side format or display of 3D videos whose either left half or right half is enlarged), the output processing unit 105 may prioritize the viewer's selection. Regardless of results of judgments made by the frame format judgment unit 103 and the program format judgment unit 102, the output processing unit 105 may perform processing in the same manner as the case where a program contained in a received video stream is judged to a 2D program.

### 1.3 Operations

Here, description is given on processing relating to output operations of the digital TV 100 in accordance with whether a program contained in a received video stream is a 2D program or a 3D program.

### (1) Buffer Switching Processing

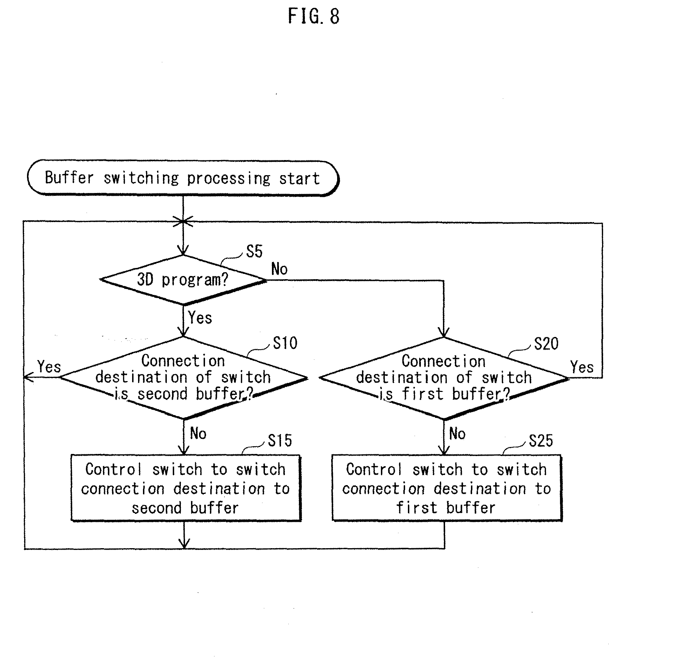

Buffer switching processing is to switch the connection destination of the switch 181 in accordance with whether a program contained in a received video stream is a 2D program or a 3D program. The buffer switching processing is described with reference to a flow chart shown in FIG. 8.

The switching control unit 183 judges whether each of frames being received is contained in a 3D program, based on a result of judgment made by the program format judgment unit 102 (Step S5).

If judging that the frame is contained in a 3D program (Step S5: Yes), the switching control unit 183 further judges whether the connection destination of the switch 181 is the second buffer 172 (Step S10). If judging that the connection destination is not the second buffer 172 (Step S10: No), the switching control unit 183 controls the switch 181 to switch the connection destination to the second buffer 172 (Step S15). Then, the processing returns to Step S5. If judging that the connection destination is the second buffer 172 (Step S10: Yes), the processing returns to Step S5.

If judging that the frame is not contained in a 3D program, that is, the frame is contained in a 2D program (Step S5: No), the switching control unit 183 further judges whether the connection destination of the switch 181 is the first buffer 171 (Step S20). If judging that the connection destination is not the first buffer 171 (Step S20: No), the switching control unit 183 controls the switch 181 to switch the connection destination to the first buffer 171 (Step S25). Then, the processing returns to Step S5. If judging that the connection destination is the first buffer 171 (Step S20: Yes), the processing returns to Step S5.

### (2) Buffer Writing Processing

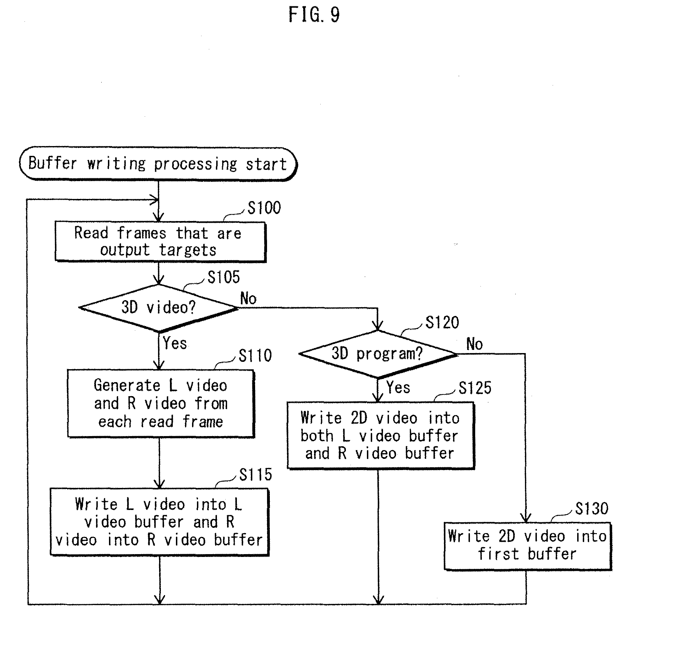

Buffer writing processing is to write frames, which are display targets, into a buffer corresponding to a program that contains the frames, namely, either a buffer corresponding to a 2D program or a buffer corresponding to a 3D program. The buffer writing processing is described with reference to a flow chart shown in FIG. 9.

The video processing unit 161 reads frames, which are output targets, from the frame buffer 104 (Step S 100).

The video processing unit 161 judges whether each of the read frames is a 3D video frame (Step S105).

If judging that the frame is a 3D video frame (Step S105: Yes), the video processing unit 161 generates an L video and an R video from the frame (Step S110). The video processing unit 161 writes the generated L video and R video into the L video buffer 173 and the R video buffer 174, respectively (Step S115).

If judging that the frame is not a 3D video frame, that is, the frame is a 2D video frame (Step S105: No), the video processing unit 161 further judges whether the frame is contained in a 3D program, based on a result of judgment made by the program format judgment unit 102 (Step S120).

If judging that the frame is contained in a 3D program (Step S120: Yes), the video processing unit 161 writes the frame (2D video) into both the L video buffer 173 and the R video buffer 174 (Step S125).

If judging that the frame is not contained in a 3D program, that is, the frame is contained in a 2D program (Step S120: No), the video processing unit 161 writes the frame (2D video) into the first buffer 171 (Step S 130).

### 1.4 Specific Example

Here, description is given on video display the case where 3D program is received, with use of a specific example.

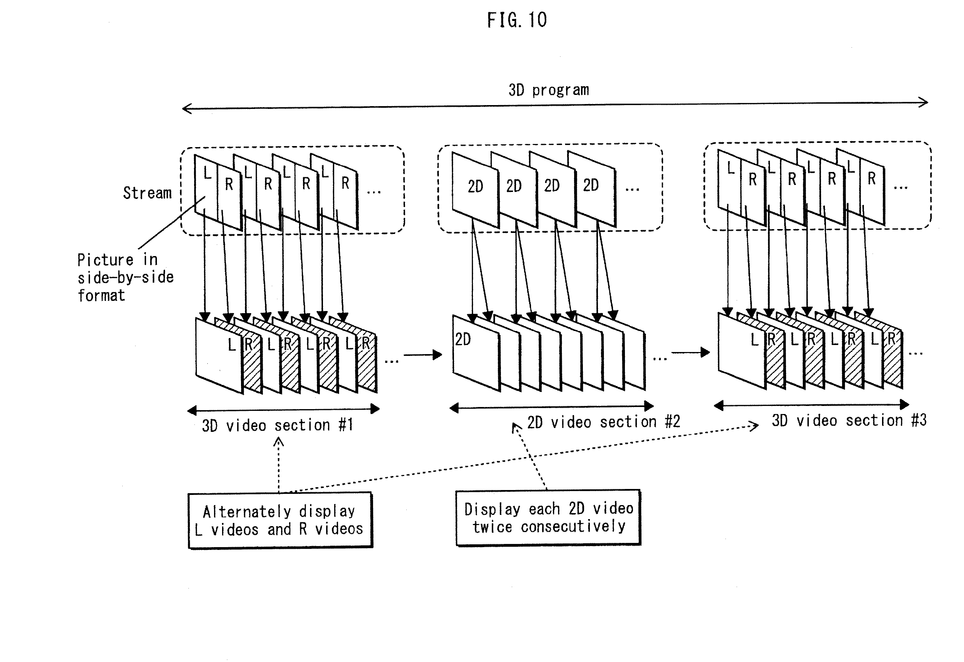

FIG. 10 shows a specific example of displaying 2D videos and 3D videos contained in a received 3D program.

FIG. 10 shows that the 3D program is sectioned into a 3D video section #1, a 2D video section #2, and a 3D video section #3.

In the 3D video section #1 and the 3D video section #3, the video processing device 100 receives a stream that contains a plurality of 3D video frames in the side-by-side format. Then, the video processing device 100 generates an L video and an R video from each of the received 3D video frames, and alternately displays the generated L videos and R videos for each 120 Hz.

In the 2D video section #2, the video processing device 100 receives a stream that contains a plurality of 2D video frames. Then, the video processing device 100 displays each of the received 2D video frames twice for each 60 Hz, that is, displays the 2D video frame at 120 Hz.

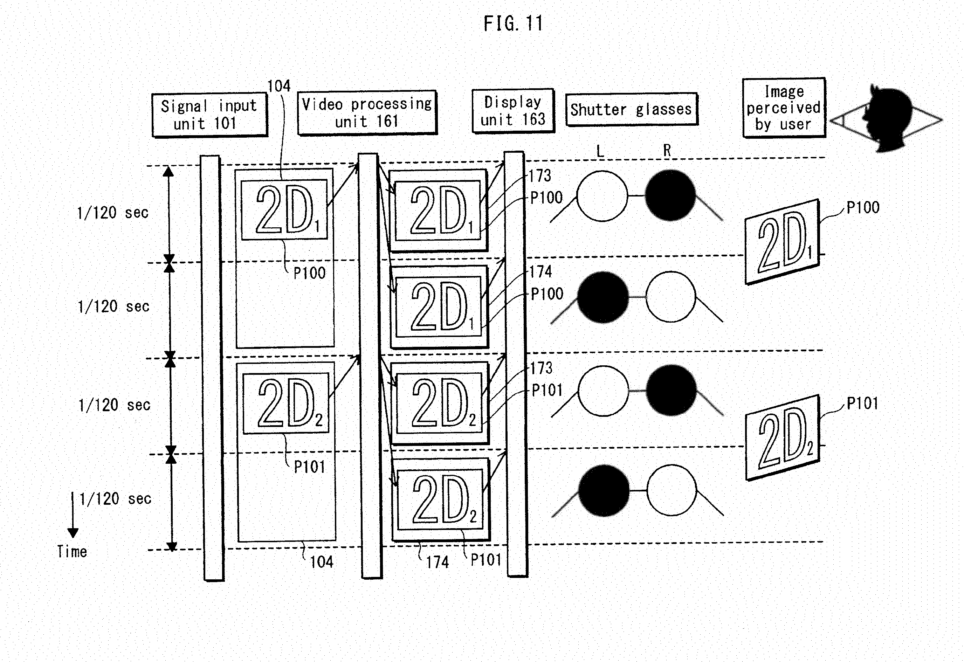

FIG. 11 shows a specific example of a mechanism for displaying 2D videos contained in a 3D program.

FIG. 11 shows that the signal input unit 101 writes decoded 2D videos P100 and P101 into the frame buffer 104 for each 1/60 (=2×1/120) sec.

The video processing unit 161 writes the 2D videos P100 and P101, which are stored in the frame buffer 104, into both the L video buffer 173 and the R video buffer 174 of the second buffer 172 for each 1/60 sec.

The display unit 163 reads the 2D videos P100 and P101 alternately from the L video buffer 173 and the R video buffer 174 for each 1/120 sec for display.

Here, shutter glasses the viewer wears alternately close its shutter for right eye and shutter for left eye for each 1/120 sec. However, an image to be displayed here is not a parallax image. Accordingly, even if the 2D video P100 is displayed twice for each 1/120 sec for example, this is viewed not as a stereoscopic image but as a planar image.

Note that while the 2D video P100 is displayed, the shutter glasses may stop opening and closing both the shutter for left eye and the shutter for right eye, that is, may keep open both the shutters. This causes the viewer to view an image having a light amount twice as much as a light amount of a 3D video. For this reason, the display unit 163 may automatically adjust a light amount for display.

### 2. Second Embodiment

In the above first embodiment, the description has been given with use of the digital TV as a video processing device of the present invention. In the present embodiment, description is given on a combination of an STB (Set Top Box) and a digital TV as a video processing device of the present invention, with reference to the drawings.

### 2.1 Structure

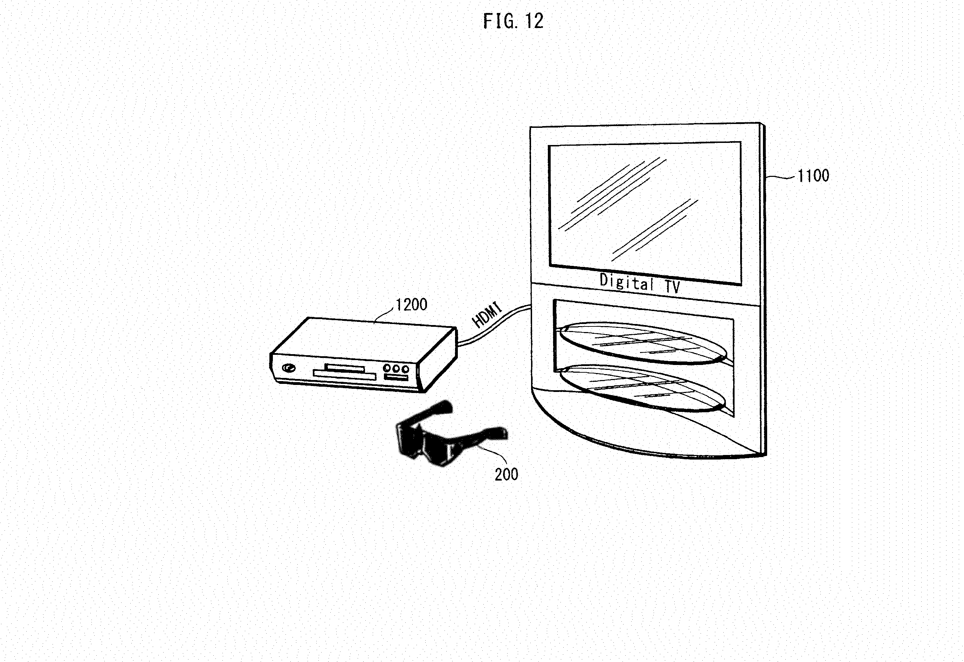

FIG. 12 shows a use state of the video processing device. As shown in FIG. 12, the video processing device, which is composed of a digital TV 1100 and an STB 1200 that are connected with each other via HDMI, and 3D glasses 200 are used by a viewer. Here, the video processing device is a combination of the digital TV 1100 and the STB 1200 that are connected with each other via HDMI.

The digital TV 1100 is capable of displaying 2D videos and 3D videos. The STB 1200 receives a stream that contains 2D videos and 3D videos. The STB 1200 outputs frames contained in the received video stream to the digital TV 1100. The digital TV 1100 displays videos by playing back the frames received from the STB 1200.

### 2.1.1 Structure of STB 1200

The STB 1200 receives a digital broadcast wave containing 2D videos and 3D videos. Also, the STB 1200 is connected with the IP network and a playback device, and displays 2D videos and 3D videos output from the IP network and the playback device.

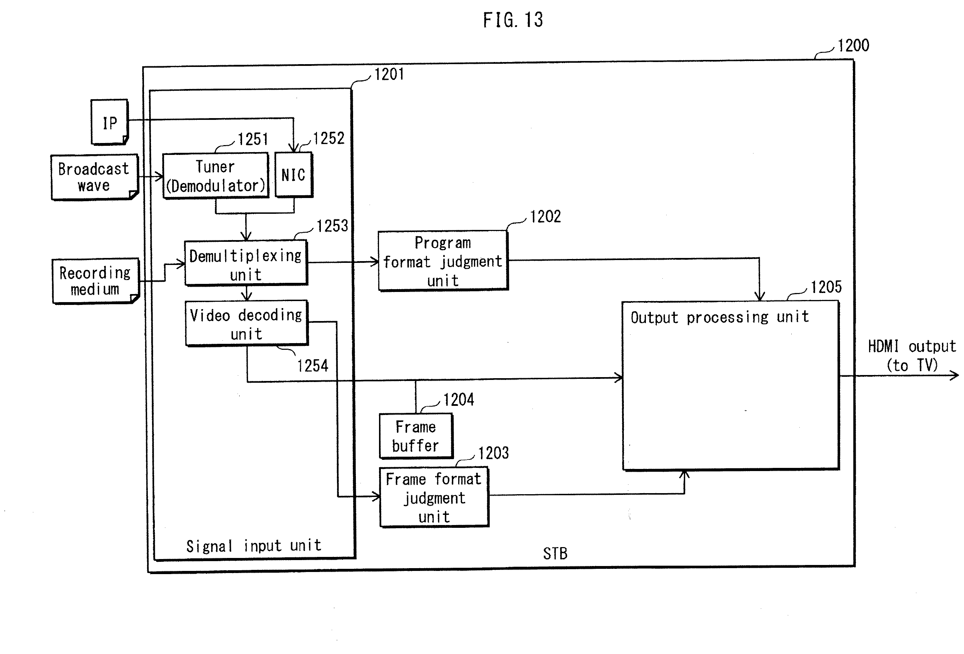

As shown in FIG. 13, the STB 1200 includes a signal input unit 1201, a program format judgment unit 1202, a frame format judgment unit 1203, a frame buffer 1204, and an output processing unit 1205.

### (1) Signal Input Unit 1201

The signal input unit 1201 receives a stream that contains 2D video frames and/or 3D video frames, which have been transmitted (output) from an external device, in the same way as the signal input unit 101 described in the first embodiment. This stream is obtained by multiplexing a video stream that contains the 2D video frames and/or the 3D video frames with PSI.

Here, the 3D video frames which have been transmitted (output) are in a 3D format such as the side-by-side format. The side-by-side format is, as described above, a format in which an L video and an R video are contained in one frame. Also, a format of a stream to be received is the same as that described in the first embodiment, and accordingly description thereof is omitted here.

The signal input unit 101 includes, as shown in FIG. 13, a tuner (demodulator) 1251, an NIC 1252, a demultiplexing unit 1253, and a video decoding unit 1254.

These respective structural elements are the same as the tuner 151, the NIC 152, the demultiplexing unit 153, and the video decoding unit 154 described in the first embodiment, and accordingly description thereof is omitted here.

### (2) Program Format Judgment Unit 1202

The program format judgment unit 1202 is the same as the program format judgment unit 102 described in the first embodiment, and accordingly description thereof is omitted here.

### (3) Frame Format Judgment Unit 1203

The frame format judgment unit 1203 is the same as the frame format judgment unit 103 described in the first embodiment, and accordingly description thereof is omitted here.

### (4) Frame Buffer 1204

The frame buffer 1204 has a region for storing frames decoded by the video decoding unit 1254.

### (5) Output Processing Unit 1205

The output processing unit 1205 outputs frames stored in the frame buffer 1204 to the digital TV 1100 connected with the STB 1200 via HDMI.

Specifically, the output processing unit 1205 reads frame stored in the frame buffer 1204.
Then, the output processing unit 1205 adds a 3D program flag and 3D video information to HDMI information, and outputs the HDMI information together with the read frames. The 3D program flag indicates whether a program that contains the read frames is a 2D program or a 3D program. The 3D video information indicates whether each of the read frames is a 2D video frame or a 3D video frame. If indicating that the frame is a 3D video frame, the 3D video information further indicates which one of 3D formats including the side-by-side format the frame is in.

### 2.1.2 Structure of Digital TV 1100

The digital TV 1100 is specifically a plasma TV, and displays 2D videos and 3D videos.

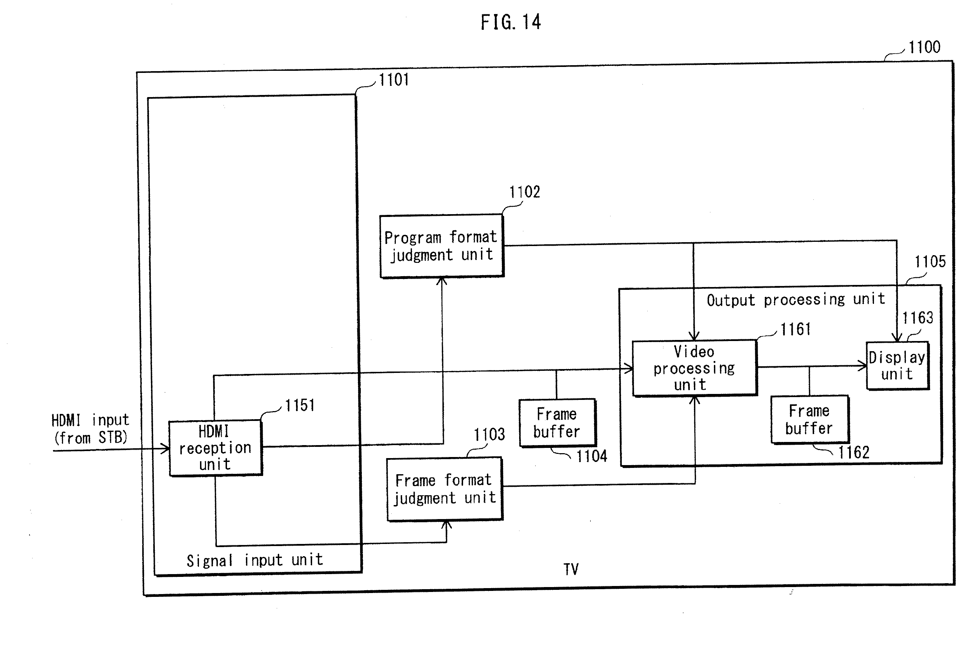

As shown in FIG. 14, the digital TV 1100 includes a signal input unit 1101, a program format judgment unit 1102, a frame format judgment unit 1103, a frame buffer 1104, and an output processing unit 1105.

### (1) Signal Input Unit 1101

The signal input unit 1101 receives signals compliant with an HDMI standard transmitted from the STB 1200.

The signal input unit 1101 includes an HDMI reception unit 1151, as shown in FIG. 14.

The HDMI reception unit 1151 receives signals compliant with the HDMI standard, namely, signals constituting 2D videos and signals constituting 3D videos here, and HDMI information.

The HDMI reception unit 1151 writes the received signals constituting 2D videos and 3D videos into the frame buffer 1104. Also, the HDMI reception unit 1151 outputs the received HDMI information to both the program format judgment unit 1102 and the frame format judgment unit 1103.

### (2) Program Format Judgment Unit 1102

Upon receiving the HDMI information, the program format judgment unit 102 judges whether a program contained in the stream received from the STB 1200 is a 2D program or a 3D program, based on a value of a 3D program flag contained in the HDMI information.

### (3) Frame Format Judgment Unit 1103

Upon receiving the HDMI information, the frame format judgment unit 1103 judges whether each of the frames received from the STB 1200 is a 2D video frame or a 3D video frame, based on 3D video information contained in the HDMI information. If judging that the frame is a 3D video frame, the frame format judgment unit 1103 further judges which one of 3D formats including the side-by-side format the frame is in, based on the 3D video information contained in the HDMI information.

### (4) Frame Buffer 1104

The frame buffer 1104 has a region for storing frames received from the STB 1200.

### (5) Output Processing Unit 1105

The output processing unit 1105 outputs videos in an output cycle based on a result of judgment made by the program format judgment unit 1102.

The output processing unit 1105 includes, as shown in FIG. 14, a video processing unit 1161, a frame buffer 1162, and a display unit 1163.

The video processing unit 1161, the frame buffer 1162, and the display unit 1163 have the same structures as the video processing unit 161, the frame buffer 162, and the display unit 163 described in the first embodiment, respectively. Accordingly, description of these structural elements is omitted here.

### 2.2 Operations

The following describes operations of the digital TV 1100 and the STB 1200.

### (1) Output Processing

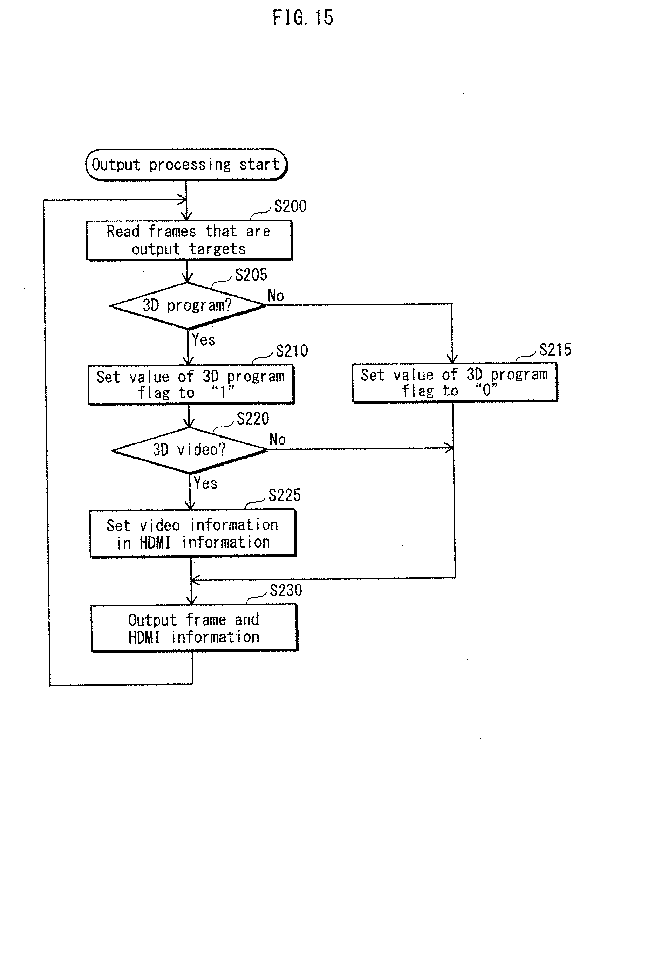

Here, description is given on processing relating to operations of the STB 1200 outputting frames to the digital TV 1100 in accordance with whether a program contained in a received video stream is a 2D program or a 3D program, with reference to a flow chart shown in FIG. 15.

The video processing unit 1205 reads frames, which are output targets, from the frame buffer 1204 (Step S200).

The output processing unit 1205 judges whether each of the read frames is contained in a 3D program, based on a result of judgment made by the program format judgment unit 1202 (Step S205). If judging that the read frame is contained in a 3D program (Step S205: Yes), the output processing unit 1205 sets a value of the 3D program flag to "1" (Step S210).

Then, the video processing unit 1205 judges whether the read frame is a 3D video frame (Step S220).

If judging that the read frame is a 3D video frame (Step S220: Yes), the output processing unit 1205 adds 3D video information to the HDM1 information (Step S225), and outputs the read frame and the HDMI information to the digital TV 1100 (Step S230).

If judging that the read frame is not contained in a 3D program, that is, the read frame is contained in a 2D program (Step S205: No), or if judging that the read frame is contained in a 3D program but is not a 3D video frame, that is, the read frame is a 2D video frame (Step S220: No), the video processing unit 1205 performs the processing in Step S230.

### (2) Buffer Switching Processing

Buffer switching processing is performed in the digital TV 1100 to switch a connection destination of the switch 181 in accordance with whether a program contained in a received video stream is a 2D program or a 3D program. Operations of this buffer switching processing are the same as those described in the first embodiment, and accordingly description thereof is omitted here.

### (3) Buffer Writing Processing

Buffer writing processing is performed by the output processing unit 1105, and is to write frames, which are display targets, into a buffer corresponding to a program that contains the frames, namely, either a buffer corresponding to a 2D program or a buffer corresponding to a 3D program. Operations of this buffer writing processing are the same as those described in the first embodiment, and accordingly description thereof is omitted here.

### 2.3 Modification

In the above second embodiment, the digital TV 1100 switches the output cycle (cycle of reading videos) in accordance with whether a program contained in a received video stream is a 2D program or a 3D program.

The output cycle may be switched by the STB 1200.

### 2.3.1 Structure

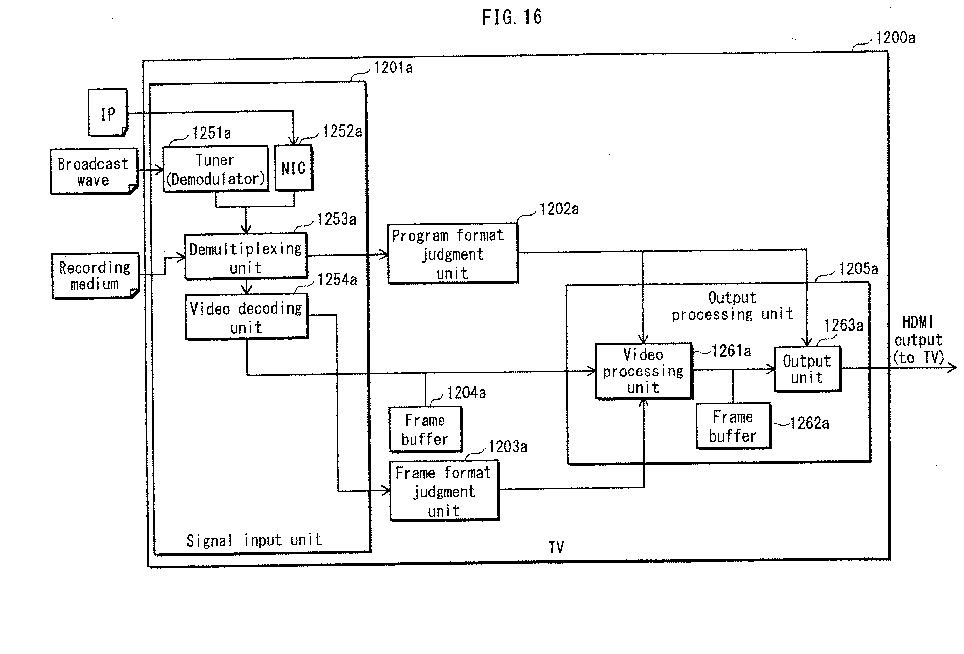

FIG. 16 shows the structure of an STB 1200a according to this modification.

The STB 1200a includes, as shown in FIG. 16, a signal input unit 1201a, a program format judgment unit 1202a, a frame format judgment unit 1203a, a frame buffer 1204a, and an output processing unit 1205a.

### (1) Signal Input Unit 1201a

The signal input unit 1201a has the same functions as the signal input unit 101 and the signal input unit 1201, and includes a tuner (demodulator) 1251a, an NIC 1252a, a demultiplexing unit 1253a, and a video decoding unit 1254a described above.

These respective structural elements are the same as the tuner 151, the NIC 152, the demultiplexing unit 153, and the video decoding unit 154 described in the first embodiment, and accordingly description thereof is omitted here.

### (2) Program Format Judgment Unit 1202a

The program format judgment unit 1202a is the same as the program format judgment unit 102 and the program format judgment unit 1202 described above, and accordingly description thereof is omitted here.

### (3) Frame Format Judgment Unit 1203a

The frame format judgment unit 1203a is the same as the frame format judgment unit 103 and the frame format judgment unit 1203 described above, and accordingly description thereof is omitted here.

### (4) Frame Buffer 1204a

The frame buffer 1204a has a region for storing frames decoded by the video decoding unit 1254a.

### (5) Output Processing Unit 1205a

The output processing unit 1205a outputs frames in an output cycle based on a result of judgment made by the program format judgment unit 1202a.

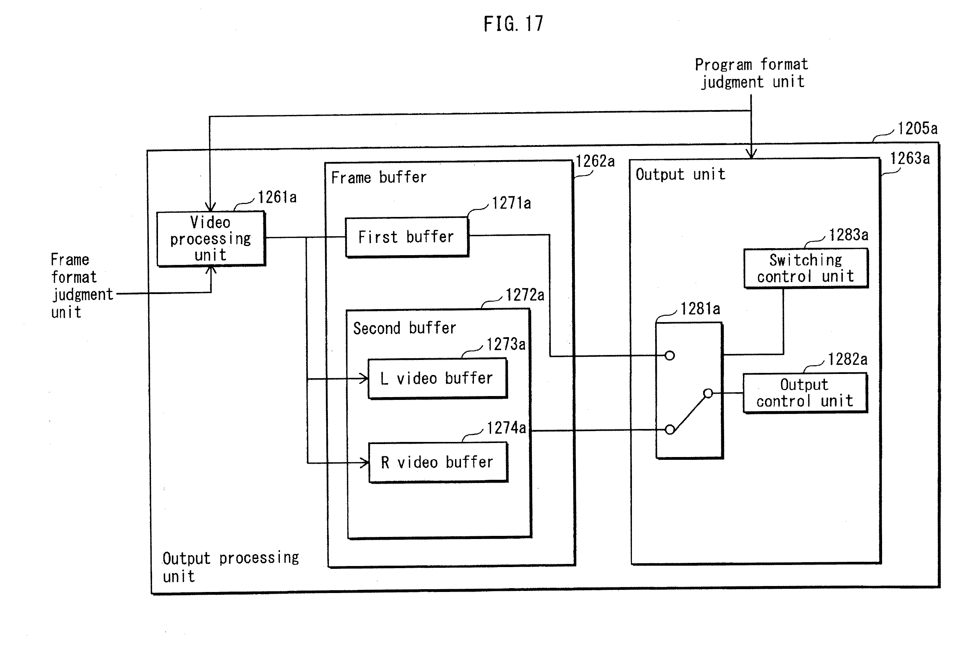

The output processing unit 1205a includes, as shown in FIG. 17, a video processing unit 1261 a, a frame buffer 1262a, and an output unit 1263a.

The video processing unit 1261 a is the same as the video processing unit 161 described in the first embodiment, and accordingly description thereof is omitted here.

The frame buffer 1262a includes, as shown in FIG. 17, a first buffer 1271a and a second buffer 1272a including an L video buffer 1273a and an R video buffer 1274a. The respective structural elements of the frame buffer 1262a are the same as the first buffer 171, the second buffer 172, the L video buffer 173, and the R video buffer 174, and accordingly description thereof is omitted here.

The output unit 1263a includes, as shown in FIG. 17, a switch 1281a, an output control unit 1282a, and a switching control unit 1283a.

The switch 1281a and the switching control unit 1283a are the same as the switch 181 and the switching control unit 183 described in the first embodiment, respectively, and accordingly description thereof is omitted here.

The output control unit 1282a switches a reading cycle of videos based on a result of the judgment made by the program format judgment unit 1202a, and reads and outputs frames to the digital TV 1100a. For example, if a program contained in a received video stream is a 2D program, the output control unit 1282a sets the reading cycle to 60 Hz, reads 2D video frames, which are output targets, from the first buffer 1271 a that is the connection destination of the switch 1281 a, and outputs the read frames.

If the program contained in the received video stream is a 3D program, the output control unit 1282a sets the reading cycle to 120 Hz, reads frames, which are output targets, alternately from the L video buffer 1273a and the R video buffer 1274a of the second buffer 1272a that is the connection destination of the switch 1281a, and outputs the read frames.

Note that when 2D videos and 3D videos are output to the digital TV 1100a, the digital TV 1100a synchronizes with the reading cycle in accordance with an HDMI video format.

### 2.3.2 Operations

### (1) Buffer Switching Processing

Buffer switching processing is performed in the STB 1200a to switch a connection destination of the switch 1281 a in accordance with whether a program contained in a received video stream is a 2D program or a 3D program. Operations of this buffer switching processing are the same as those described in the first embodiment, and accordingly description thereof is omitted here.

### (2) Buffer Writing Processing

Buffer writing processing is performed by the video processing unit 1261a to write frames, which are display targets, into a buffer corresponding to a program that contains the frames, namely, either a buffer corresponding to a 2D program or a buffer corresponding to a 3D program. Operations of this buffer writing processing are the same as those described in the first embodiment, and accordingly description thereof is omitted here.

Note that, in parallel with writing processing of writing into the frame buffer 1262a, the output unit 1263a reads frames, which are output targets, from a corresponding buffer in a reading cycle based on a result of judgment made by the program format judgment unit 1202a, and outputs the read frames to the digital TV 1100a.

### 3. Third Embodiment

A digital TV having a recording function may be employed as a video processing device of the present invention.

The following describes a digital TV having a recording function as the video processing device, as a video processing device of the present invention.

### 3.1 Structure

A digital TV 2100 is specifically a plasma TV having a function of receiving a stream that contains 2D videos and/or 3D videos, in the same way as in the first embodiment. Furthermore, the digital TV 2100 has a function of recording the received video stream into an HDD and/or a BD.

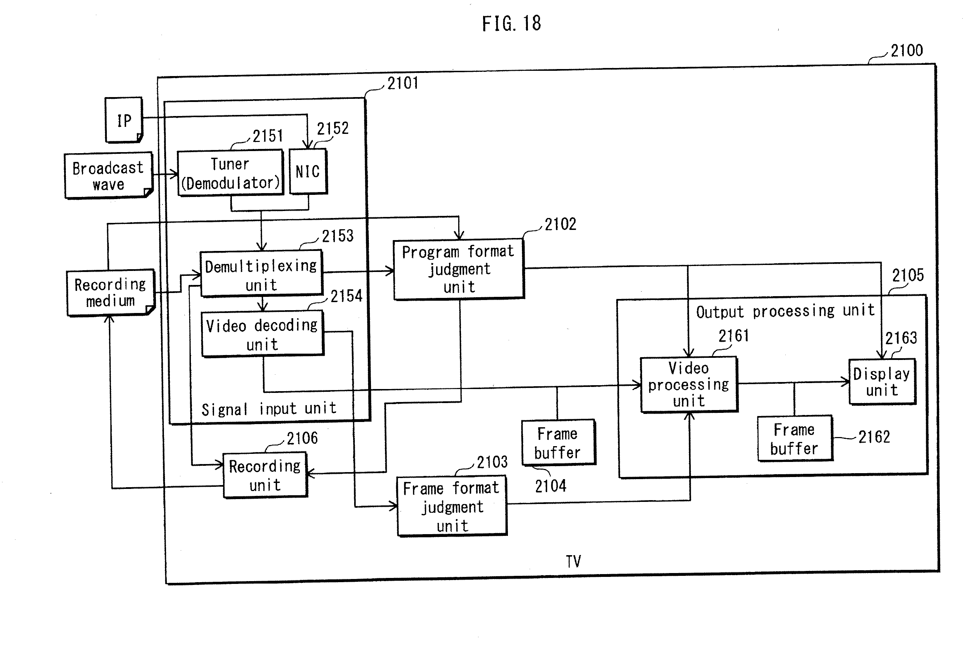

As shown in FIG. 18, the digital TV 2100 includes a signal input unit 2101, a program format judgment unit 2102, a frame format judgment unit 2103, a frame buffer 2104, an output processing unit 2105, and a recording unit 2106.

### (1) Signal Input Unit 2101

The signal input unit 2101 receives a stream that contains 2D video frames and/or 3D video frames, which have been transmitted (output) from an external device. This stream is obtained by multiplexing a video stream that contains the 2D video frames and/or the 3D video frames with PSI, in the same way as in the first embodiment.

Here, the 3D video frames are in the side-by-side format, in the same way as in the first embodiment.

Also, frames have the same signal format as that described in the first embodiment.

The signal input unit 2101 includes, as shown in FIG. 18, a tuner (demodulator) 2151, an NIC 2152, a demultiplexing unit 2153, and a video decoding unit 2154.

### (1-1) Tuner 2151 and NIC 2152

The tuner 2151 and the NIC 2152 are the same as the tuner 151 and the NIC 152 described in the first embodiment, respectively, and accordingly description thereof is omitted here.

### (1-2) Demultiplexing Unit 2153

The demultiplexing unit 2153 performs operations in a recording mode and a normal playback mode, differently from operations in a record playback mode, and accordingly description thereof is given separately. Here, the normal playback mode means a state where no recording is performed and a received broadcast wave is displayed. Also, the recording playback mode means a state where a recorded program is played back for display.

### (Recording Mode and Normal Playback Mode)

In the recording mode and the normal playback mode, the demultiplexing unit 2153 demultiplexes a stream received via the tuner 2151 and the NIC 2152 into a video stream, which contains 2D video frames and/or 3D video frames, and PSI. In the recording mode, the demultiplexing unit 2153 outputs the demultiplexed video stream and PSI to the recording unit 2106 and the program format judgment unit 2102, respectively. In order to display a video, the demultiplexing unit 2153 outputs the demultiplexed video stream and PSI to the video decoding unit 2154 and the program format judgment unit 2102, respectively. Here, to display a video means both to display a video which is being recorded and to display a program in the normal playback mode.

### (Record Playback Mode)

In the record playback mode, the demultiplexing unit 2153 acquires a recorded stream from a storage region (recording medium such as an HDD and a BD) designated by the viewer, and demultiplexes the acquired stream into a video stream, which contains 2D video frames and/or 3D videos frames, and other stream.

The demultiplexing unit 2153 outputs the demultiplexed video stream to the video decoding unit 2154.

### (1-3) Video Decoding Unit 2154

Upon receiving the video stream from the demultiplexing unit 2153, the video decoding unit 2154 decodes the received video stream, and also extracts 3D video information stored in the video stream in units of frames. The video decoding unit 2154 generates videos in units of frames. In this case, the 3D video frames are in the side-by-side format, and each frame has not been divided into an L image and an R image.

The video decoding unit 2154 writes the generated videos in units of frames into the frame buffer 2104, and outputs the extracted 3D video information in units of frames to the frame format judgment unit 2103.

### (2) Program Format Judgment Unit 2102

In the recording mode and the normal playback mode, upon receiving the PSI from the demultiplexing unit 2153, the program format judgment unit 2102 judges whether a program contained in the stream received from the demultiplexing unit 2153 is a 2D program or a 3D program, based on a value of a 3D program flag contained in the received PSI.

In the recording mode, the program format judgment unit 2102 generates file attribute information (metadata) to be recorded in correspondence with a stream to be recorded, and outputs the generated file attribute information to the recording unit 2106. The program format judgment unit 2102 adds program format information to the file attribute information, and outputs the file attribute information to the recording unit 2106. The program format information indicates whether the program contained in the stream is a 2D program or a 3D program, based on the result of the judgment made based on the value of the 3D program flag contained in the PSI.

In the record playback mode, the program format judgment unit 2102 reads file attribute information from a storage region (recording medium such as an HDD and a BD) corresponding to a stream to be played back. Based on program format information contained in file attribute information, the program format judgment unit 2102 judges whether a program, which is a playback target, is a 2D program or a 3D program.

The following describes the structure of file attribute information.

The file attribute information is compliant with the ETSI TS 102 822 (TV Anytime) standard, for example. In the present embodiment, program format information indicating whether a target program is a 2D program or a 3D program is added, by extending an AV attribute compliant with the ETSI TS 102 822 standard. If the target program is a 2D program, a value "0" is set in the program format information, and if the target program is a 3D program, a value "1" is set in the program format information. Accordingly, it is possible to judge whether a program, which is a playback target, is a 2D program or a 3D program, by referring to the 3D program flag.

### (3) Frame Format Judgment Unit 2103

The frame format judgment unit 2103 is the same as the frame format judgment unit 103 described in the first embodiment, and accordingly description thereof is omitted here.

### (4) Frame Buffer 2104

The frame buffer 2104 is the same as the frame buffer 104 described in the first embodiment, and accordingly description thereof is omitted here.

### (5) Output Processing Unit 2105

The output processing unit 2105 outputs videos in an output cycle based on a result of judgment made by the program format judgment unit 2102.

The output processing unit 2105 includes, as shown in FIG. 18, a video processing unit 2161, a frame buffer 2162, and a display unit 2163.

The video processing unit 2161, the frame buffer 2162, and the display unit 2163 are the same as the video processing unit 161, the frame buffer 162, and the display unit 163 described in the first embodiment, respectively. Accordingly, description of these structural elements is omitted here.

### (6) Recording Unit 2106

In the recording mode, upon receiving a multiplexed video stream and generated file attribute information from the demultiplexing unit 2153 and the program format judgment unit 2102, respectively, the recording unit 2106 records the received video stream and file attribute information in correspondence with each other into a storage region (recording medium such as an HDD and a BD) designated in advance by the viewer.

### 3.2 Operations

Here, in order to display a program, the digital TV 2100 performs buffer switching processing of switching the connection destination between the buffers of the frame buffer 2162 in accordance with whether a program, which is a display target, is a 2D program or a 3D program, and writing processing of writing frames into a buffer after switching.

The buffer switching processing is the same as that described in the first embodiment, and accordingly description thereof is omitted here.

Also, the buffer writing processing is the same as that described in the first embodiment, and accordingly description thereof is omitted here.

### 3.3 Modification

The digital TV 2100 according to the above third embodiment records a received video stream into a recording medium without decoding the video stream.

Alternatively, the digital TV 2100 may decode the received video stream, perform predetermined processing on the decoded video stream, re-encode the decoded video stream, and record the re-encoded video stream.

The following describes the structure of a digital TV 2100a according to this modification.

### 3.3.1 Structure

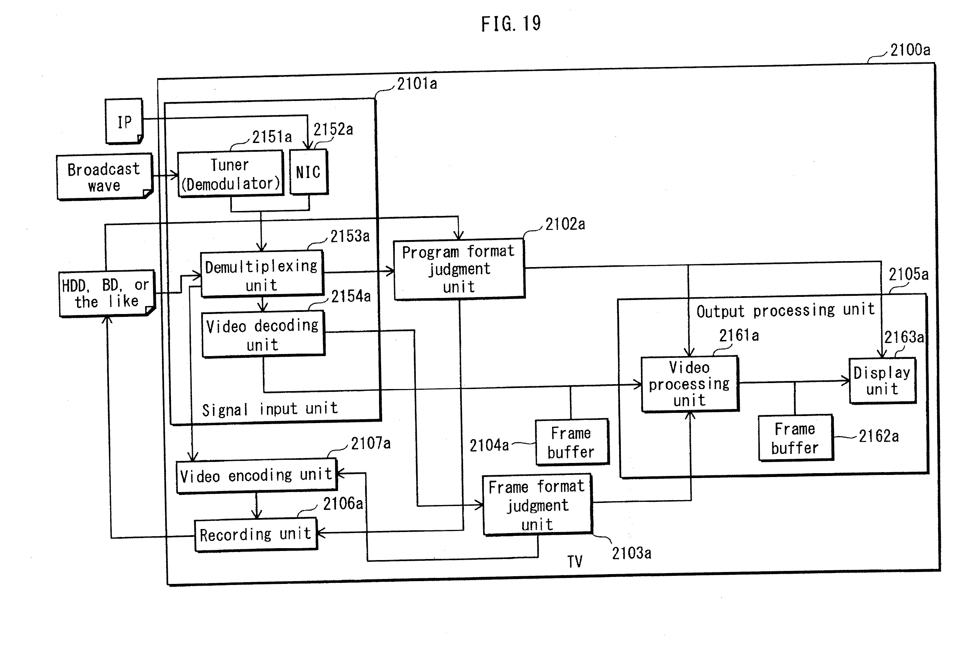

The digital TV 2100a includes, as shown in FIG. 19, a signal input unit 2101a, a program format judgment unit 2102a, a frame format judgment unit 2103a, a frame buffer 2104a, an output processing unit 2105a, a recording unit 2106a, and a video encoding unit 2107a.

### (1) Signal Input Unit 2101 a

The signal input unit 2101 a receives a stream that contains 2D video frames and/or 3D video frames, which have been transmitted (output) from an external device. This stream is obtained by multiplexing a video stream that contains the 2D video frames and/or the 3D video frames with PSI, in the same way as in the first embodiment.

Here, the 3D video frames are in the side-by-side format, in the same way as in the first embodiment.

Also, frames have the same signal format as that described in the first embodiment.

The signal input unit 2101a includes, as shown in FIG. 19, a tuner (demodulator) 2151a, an NIC 2152a, a demultiplexing unit 2153a, and a video decoding unit 2154a.

### (1-1) Tuner 2151a and NIC 2152a

The tuner 2151a and the NIC 2152a are the same as the tuner 151 and the NIC 152 described in the first embodiment, respectively, and accordingly description thereof is omitted here.

### (1-2) Demultiplexing Unit 2153a

The demultiplexing unit 2153a performs operations in a recording mode and a normal playback mode, differently from operations in a recording playback mode, and accordingly description thereof is given separately.

### (Recording Mode and Normal Playback Mode)

In the recording mode and the normal playback mode, the demultiplexing unit 2153a demultiplexes a stream received via the tuner 2151 a and the NIC 2152a into a video stream, which contains 2D video frames and/or 3D video frames, and PSI. The demultiplexing unit 2153a outputs the demultiplexed video stream and PSI to the video decoding unit 2154a and the program format judgment unit 2102a, respectively.

### (Record Playback Mode)

In the record playback mode, the demultiplexing unit 2153a acquires a recorded stream from a storage region (recording medium such as an HDD and a BD) designated by the viewer, and demultiplexes the acquired stream into a video stream, which contains 2D video frames and/or 3D videos frames, and other stream.

The demultiplexing unit 2153a outputs the demultiplexed video stream to the video decoding unit 2154a.

Note that the file attribute information has been described in the third embodiment, and accordingly description thereof is omitted here.

### (1-3) Video Decoding Unit 2154a

Upon receiving the video stream from the demultiplexing unit 2153a, the video decoding unit 2154a decodes the received video stream, and also extracts 3D video information stored in the video stream in units of frames.

Operations performed in a recording mode differ from operations performed in a normal playback mode and a record playback mode, and accordingly description thereof is given separately.

### (Recording Mode)

The video decoding unit 2154a outputs generated videos in units of frames into the frame buffer 2107a, and outputs extracted 3D video information in units of frames to the frame format judgment unit 2103a.

### (Playback Mode)

The video decoding unit 2154a writes generated videos in units of frames into the frame buffer 2104a, and outputs the extracted 3D video information in units of frames to the frame format judgment unit 2103a.

### (2) Program Format Judgment Unit 2102a

The program format judgment unit 2102a is the same as the program format judgment unit 2102 described in the third embodiment, and accordingly description thereof is omitted here.

### (3) Frame Format Judgment Unit 2103a

The frame format judgment unit 2103a performs operations in the recording mode and the normal playback mode, differently from operations in the record playback mode, and accordingly description thereof is given separately.

### (Playback Mode)

Upon receiving the extracted 3D video information from the video decoding unit 154, the frame format judgment unit 2103a judges whether each of the decoded frames is a 2D video frame or a 3D video frame based on a value of the 3D video information.

### (Recording Mode)

Upon receiving the extracted 3D video information from the video decoding unit 154, the frame format judgment unit 2103a judges whether each of the decoded frames is a 2D video frame or a 3D video frame based on a value of the 3D video information, and outputs a result of the judgment to the video encoding unit 2107a.

### (4) Frame Buffer 2104a

The frame buffer 2104a is the same as the frame buffer 104 described in the first embodiment, and accordingly description thereof is omitted here.

### (5) Output Processing Unit 2105a

The output processing unit 2105a outputs videos in an output cycle based on a result of judgment made by the program format judgment unit 2102.

The output processing unit 2105a includes, as shown in FIG. 19, a video processing unit 2161a, a frame buffer 2162a, and a display unit 2163a.

The video processing unit 2161a, the frame buffer 2162a, and the display unit 2163a are the same as the video processing unit 161, the frame buffer 162, and the display unit 163 described in the first embodiment, respectively. Accordingly, description of these structural elements is omitted here.

### (6) Video Encoding Unit 2107a

The video encoding unit 2107a has a function of re-encoding frames, which are recording targets.

The video encoding unit 2107a receives decoded frames and a result of judgment as to the frame format from the video decoding unit 2154a and the frame format judgment unit 2103a, respectively.

The video encoding unit 2107a encodes each of the frames in accordance with a code format of the frame, adds the received result of judgment as to the frame format to the encoded frame so as to generate a video stream, and outputs the generated video stream to the recording unit 2106a.

### (7) Recording Unit 2106a

In the recording mode, upon receiving the re-encoded video stream and the file attribute information from the video encoding unit 2107a and the program format judgment unit 2102a, respectively, the recording unit 2106a records the received video stream and file attribute information in correspondence with each other into a storage region (recording medium such as an HDD and a BD) designated in advance by the viewer.

### 3.3.2 Operations

Buffer switching processing and buffer writing processing performed in the digital TV 2100a are the same as those described in the first embodiment, respectively, and accordingly description thereof is omitted here.

### 4. Fourth Embodiment

In the above embodiments, frames each contain information indicating whether the frame is a 2D video frame or a 3D video frame.

Alternatively, the frames each may not contain this information. The following describes the structure and operations of a digital TV 3100 as a video processing device relating to the present embodiment.

In the present embodiment, frames each do not contain information indicating whether the frame is a 2D video frame or a 3D video frame.

### 4.1 Structure

The digital TV 3100 is specifically a plasma TV, and has a function of receiving a stream that contains 2D videos and 3D videos, in the same way as in the first embodiment.

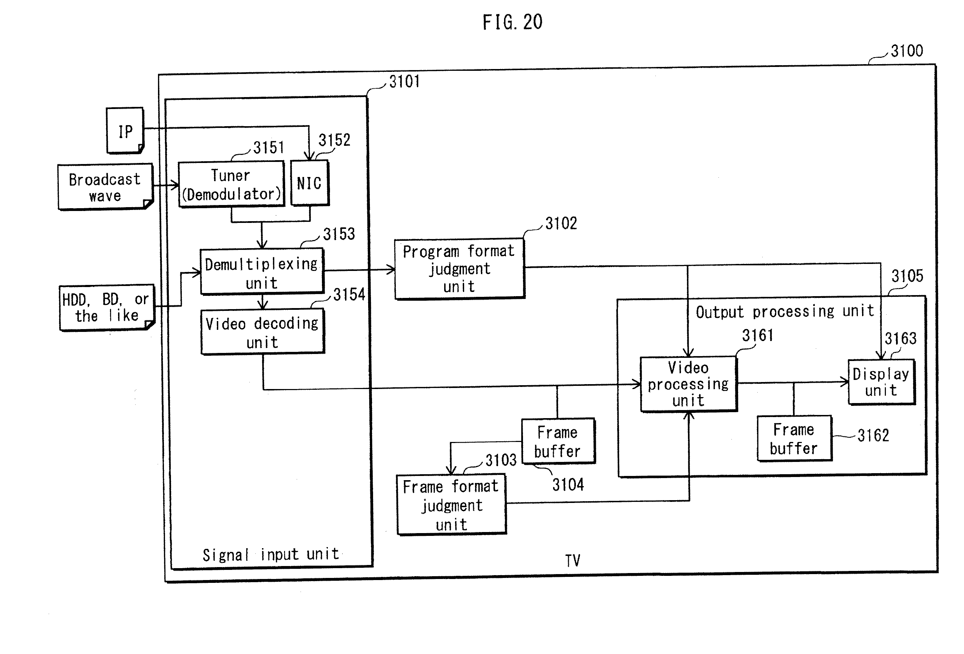

As shown in FIG. 20, the digital TV 3100 includes a signal input unit 3101, a program format judgment unit 3102, a frame format judgment unit 3103, a frame buffer 3104, and an output processing unit 3105.

### (1) Signal Input Unit 3101

The signal input unit 3101 receives a stream that contains 2D video frames and/or 3D video frames, which have been transmitted (output) from an external device. This stream is obtained by multiplexing a video stream that contains the 2D video frames and/or the 3D video frames with PSI, in the same way as in the first embodiment.

Here, the frames for 3D videos are in the side-by-side format, in the same way as in the first embodiment.

Also, frames have the same signal format as that described in the first embodiment.

The signal input unit 3101 includes, as shown in FIG. 20, a tuner (demodulator) 3151, an NIC 3152, a demultiplexing unit 3153, and a video decoding unit 3154.

The tuner 3151, the NIC 3152, and the demultiplexing unit 3153 are the same as the tuner 151, the NIC 152, and the demultiplexing unit 153 described in the first embodiment, respectively, and accordingly description thereof is omitted here.

The video decoding unit 3154 differs from the video decoding unit 154 described in the first embodiment in that the video decoding unit 3154 outputs a result of decoding to only the frame buffer 3104. As for the rest, the video decoding unit 3154 has the same functions as the video decoding unit 154.

### (2) Program Format Judgment Unit 3102

The program format judgment unit 3102 is the same as the program format judgment unit 102 described in the first embodiment, and accordingly description thereof is omitted here.

### (3) Frame Buffer 3104

The frame buffer 3104 is the same as the frame buffer 104 described in the first embodiment, and accordingly description thereof is omitted here.

### (4) Frame Format Judgment Unit 3103

The frame format judgment unit 3103 judges whether frames stored in the frame buffer 3104 are each in a 3D format such as the side-by-side format. If judging that the frame is in a 3D format, the frame format judgment unit 3103 further judges which one of 3D formats including the side-by-side format the frame is in.

Specifically, the frame format judgment unit 3103 divides the frame into m equal pieces and n equal pieces in the horizontal direction and the vertical direction, respectively, and verifies the degree of similarity of images in each divided piece by changing the values of m and n. Then, if the degree of similarity in the horizontal direction is equal to or greater than a predetermined value, the frame format judgment unit 3103 judges that the frame is in the side-by-side format. If the degree of similarity in the vertical direction is equal to or greater than a predetermined value, the frame format judgment unit 3103 judges that the frame is in the top-and-bottom format.

### (5) Output Processing Unit 3105

The output processing unit 3105 outputs videos in an output cycle based on a result of judgment made by the program format judgment unit 3102.

The output processing unit 3105 includes, as shown in FIG. 20, a video processing unit 3161, a frame buffer 3162, and a display unit 3163.

The video processing unit 3161, the frame buffer 3162, and the display unit 3163 are the same as the video processing unit 161, the frame buffer 162, and the display unit 163 described in the first embodiment, respectively. Accordingly, description of these structural elements is omitted here.

### 4.2 Operations

Here, in order to display a program, the digital TV 3100 performs buffer switching processing of switching the connection destination between the buffers of the frame buffer 3162 in accordance with whether a program, which is a display target, is a 2D program or a 3D program, and writing processing of writing frames into a buffer after switching.

This buffer switching processing is the same as that described in the first embodiment, and accordingly description thereof is omitted here.

Also, the buffer writing processing is the same as that described in the first embodiment, and accordingly description thereof is omitted here.

### 5. Fifth Embodiment

In the above embodiments, the video processing device receives a stream obtained by multiplexing frames with PSI that contains a 3D program flag.

Alternatively, a stream to be received may be constituted by only a plurality of frames. Further alternatively, a stream to be received may be obtained by multiplexing frames with PSI that does not contain a 3D program flag.

The following describes the structure and operations of a digital TV 4100 as a video processing device relating to this modification.

### 5.1 Structure

The digital TV 4100 is specifically a plasma TV, and has a function of receiving a stream that contains 2D videos and 3D videos, in the same way as in the first embodiment.

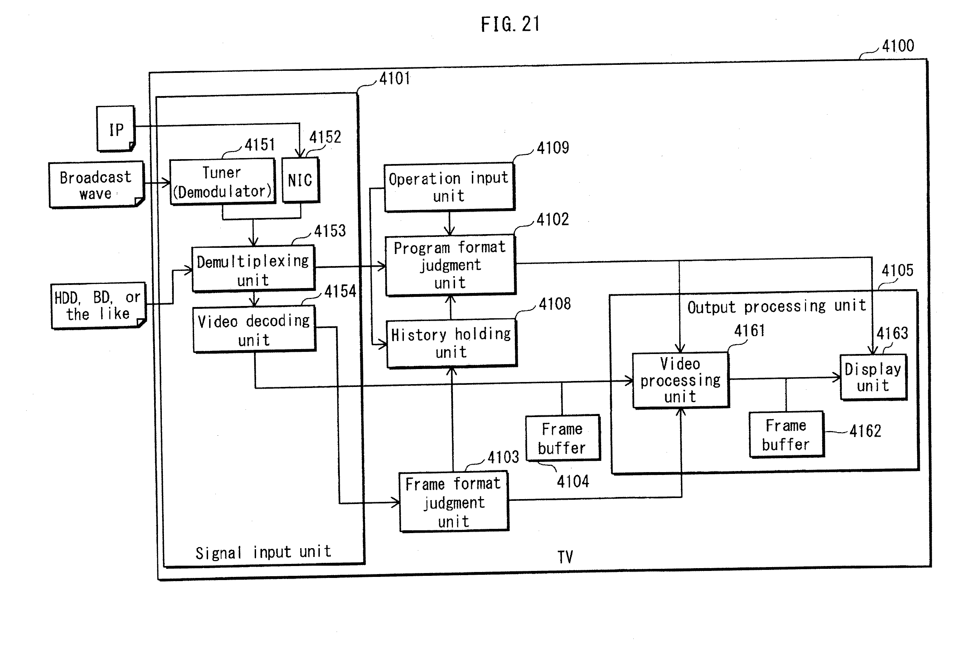

As shown in FIG. 21, the digital TV 4100 includes a signal input unit 4101, a program format judgment unit 4102, a frame format judgment unit 4103, a frame buffer 4104, an output processing unit 4105, a history holding unit 4108, and an operation input unit 4109.

### (1) Signal Input Unit 4101

The signal input unit 4101 receives a stream that contains 2D video frames and/or 3D video frames, which have been transmitted (output) from an external device. The stream is obtained by multiplexing a video stream that contains the 2D video frames and/or the 3D video frames with PSI, in the same way as in the first embodiment.

Here, the 3D video frames are in the side-by-side format, in the same way as in the first embodiment.

Also, frames have the same signal format as that described in the first embodiment.

The signal input unit 4101 includes, as shown in FIG. 21, a tuner (demodulator) 4151, an NIC 4152, a demultiplexing unit 4153, and a video decoding unit 4154.

The tuner 4151, the NIC 4152, and the video decoding unit 4154 are the same as the tuner 151, the NIC 152, and the video decoding unit 154 described in the first embodiment, respectively, and accordingly description thereof is omitted here.

The demultiplexing unit 4153 demultiplexes the received stream into a video stream, and outputs the demultiplexed video stream to the video decoding unit 4154.

### (2) History Holding Unit 4108

The history holding unit 4108 has a region for storing a result of judgment made by the frame format judgment unit 4103.

### (3) Frame Format Judgment Unit 4103

The frame format judgment unit 4103 makes the same judgment as the frame format judgment unit 103 described in the first embodiment.

The frame format judgment unit 4103 writes judgment information into the history holding unit 4108, in accordance with a result of the judgment. For example, if judging that a frame is a 2D video frame, the frame format judgment unit 4103 writes a value "0" into the history holding unit 4108, and if judging that the frame is a 3D video frame, the frame format judgment unit 4103 writes a value "1" into the history holding unit 4108.

### (4) Program Format Judgment Unit 4102

The program format judgment unit 4102 judges whether a program contained in a received video stream is a 2D program or a 3D program, by referring to a history of results of judgments made by the frame format judgment unit 4103, which is stored in the history holding unit 4108, Note that the program format judgment unit 4102 refers to the history between writing judgment information.

Specifically, if a value "1" is indicated by the judgment information with respect to a frame contained in a received video stream when the program format judgment unit 4102 refers to the judgment information, the program format judgment unit 4102 judges whether there are a predetermined number or more of successive frames back from the current frame, each of which has judgment information indicating a value "1".

If judging that there are the predetermined number or more of successive frames each having judgment information indicating a value "1", the program format judgment unit 4102 judges that the program contained in the received video stream is a 3D program, and stops subsequent judgment. Then, upon receiving an instruction to re-start judgment, the program format judgment unit 4102 restarts judging whether a program contained in a stream, which has been subsequently received, is a 2D program or a 3D program.

If there are not the predetermined number or more of successive frames each having judgment information indicating a value "1", the program format judgment unit 4102 judges that the program contained in the received video stream is a 2D program. Then, the program format judgment unit 4102 continues to judge whether a program contained in a stream, which has been subsequently received, is a 2D program or a 3D program.

### (5) Operation Input Unit 4109

The operation input unit 4109 receives, from the viewer, an instruction to select a channel, an instruction to turn power off, and so on.

Upon receiving an instruction to select a channel (switch a channel) from the viewer, the operation input unit 4109 resets the history held in the history holding unit 4108, and instructs the program format judgment unit 4102 to re-start judgment. At this time, the tuner 4151 receives a broadcast wave of a channel selected by the viewer.

Upon receiving an instruction to turn power off from the viewer, the operation input unit 4109 resets the history held in the history holding unit 4108. Then, the digital TV 4100 is turned power off. In this case, the digital TV 4100 is turned power on again, the program format judgment unit 4102 starts judgment as to whether a program contained in a received video stream is a 2D program or a 3D program.

### (6) Frame Buffer 4104

The frame buffer 4104 is the same as the frame buffer 104 described in the first embodiment, and accordingly description thereof is omitted here.

### (7) Output Processing Unit 4105

The output processing unit 4105 outputs videos in an output cycle based on a result of judgment made by the program format judgment unit 4102.

The output processing unit 4105 includes, as shown in FIG. 21, a video processing unit 4161, a frame buffer 4162, and a display unit 4163.

The video processing unit 4161, the frame buffer 4162, and the display unit 4163 are the same as the video processing unit 161, the frame buffer 162, and the display unit 163 described in the first embodiment, respectively. Accordingly, description of these structural elements is omitted here.

Note that, as is conventionally done, the output processing unit 4105 switches the output cycle in units of frames as necessary until the program format judgment unit 4102 makes judgment.

### 5.2 Operations

Here, in order to display a program, the digital TV 4100 performs program judgment processing of judging whether a program to be displayed is a 2D program or a 3D program, buffer switching processing of switching the connection destination between the buffers of the frame buffer 4162 in accordance with whether a program to be displayed is a 2D program or a 3D program, and writing processing of writing frames into a buffer after switching.

This buffer switching processing is the same as that described in the first embodiment, and accordingly description thereof is omitted here.

Also, the buffer writing processing is the same as that described in the first embodiment, and accordingly description thereof is omitted here.

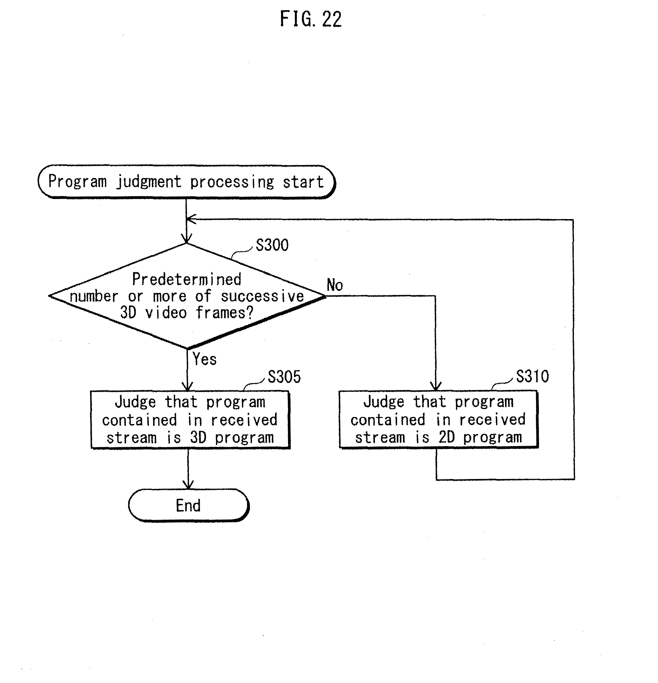

The following describes program judgment processing with reference to a flow chart shown in FIG. 22.

If a frame contained in a received video stream is a 3D video frame when the program format judgment unit 4102 refers to judgment information, the program format judgment unit 4102 judges whether there are a predetermined number or more of successive 3D video frames back from the current frame (Step S300). Specifically, the program format judgment unit 4102 judges whether there are the predetermined number or more of successive frames back from the current frame, each of which has judgment information indicating a value "1".

If judging that there are the predetermined number or more of successive 3D video frames back from the current frame (Step S300: Yes), the program format judgment unit 4102 judges that a program contained in a received video stream is a 3D program (Step S305). Then, the processing ends.

If judging that there are not the predetermined number or more of successive 3D video frames back from the current frame (Step S300: No), the program format judgment unit 4102 judges that the program contained in the received video stream is a 2D program (Step S310). Then, the processing returns to Step S300.

### 6. Modifications

Although the present invention has been described based on the embodiments, the present invention is not limited to these embodiments. The present invention includes the following modifications, for example.

(1) In the above embodiments, a video stream contains frames, which have been transmitted (output), have the signal format compliant with the H.264|MPEG4/AVC standard.

Alternatively, the frames that has been transmitted (output) may have a signal format compliant with the MPEG2 standard.

In this case, it is only necessary to set a flag indicating each of the frames is a 2D video frame or a 3D video frame, in the data structure "user_data" or "extension_data" defined in the MPEG2 standard. Alternately, it is only necessary to set this flag indicating the frame is a 2D video frame or a 3D video frame, in the data structure "PES_private_data" or "PES_extension_field_data" defined in the MPEG2-SYSTEMS standard.

(2) In the above embodiments, a region of a PMT as PSI where a 3D program flag is contained is just one example.

Alternately, the 3D program flag may be contained in the descriptor region T113 shown in FIG. 6, for example.

If a video (stream) compliant with the H.264|MPEG4/AVC standard has been transmitted, data of an AVC video descriptor is stored in the descriptor region T113. If a stream compliant with the MPEG2 standard has been transmitted, data of a video decode control descriptor is stored in the descriptor region T113. Accordingly, it is only necessary to set a 3D program flag in a part of the data structure of the AVC video descriptor or the video decode control descriptor where nothing has been defined.

Alternatively, it is only necessary to newly define, in the descriptor region T113, a descriptor other than the above two descriptors. Further alternatively, it is only necessary to set a new value in the ES type T110.

(3) In the above embodiments, information to be multiplexed with a video stream, which is to be transmitted, is PSI.

Alternatively, information to be multiplexed with the video stream may be SI (Service Information).

In this case, an SDT (Service Description Table) and an EIT (Event Information Table) may be employed as the SI.

### (3-1) SDT

Here, description is given on a case where an SDT is used as the SI.

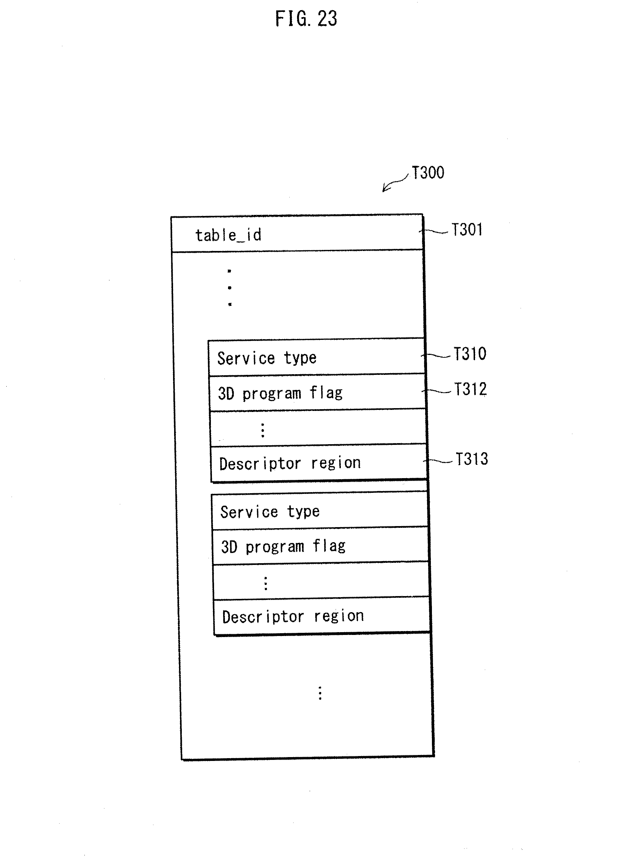

An SDT T300 contains information in units of channels. FIG. 23 shows an example of the data structure of the SDT T300. Since a table identifier (table_id) T301, ES types T310, and descriptor regions T313 are known, description thereof is omitted here. The 3D program flag T312 is a flag for identifying whether a program contained in a stream corresponding to the SDT T300 is a 2D program or a 3D program. Specifically, the 3D program flag is one-bit information, and has a value "0" indicating a 2D program and a value "1" indicating a 3D program. Here, the SDT T300 contains a plurality of combinations each composed of the service type T310, the 3D program flag T312, and the descriptor region T313.

In the present modification, the 3D program flag T312 is contained as information subsequent to the service type T310.

Alternatively, a new descriptor may be defined in the descriptor region T313. Further alternatively, a new value may be set in the service type T310.

### (3-2) EIT

An EIT contains information in units of programs, a component descriptor and a content descriptor.

In the case where this EIT is employed as the SI, it is only necessary to assign a 3D program flag to a region of the component descriptor where nothing is currently defined. Alternatively, it is only necessary to assign, to an 8-bit user_nibble in the content descriptor, information indicating whether a program contained in a stream is a 2D program or a 3D program. This makes it possible to judge whether the program is a 2D program or a 3D program.

Further alternatively, a new descriptor may be defined.

(4) In the third embodiment, file attribute information is compliant with the ETSI TS 102 822 standard.

Alternatively, the file attribute information may be compliant with other standard, or may have an independent format.

For example, the file attribute information may be compliant with the ISO_IEC_14496-12 standard. Further alternatively, the file attribute information may be compliant with other standard such as BDA (Blu-ray Disc Association), SDA (SD Association), and DVD Forum.

(5) In the above third embodiment, the video processing device records a program into a recording medium and plays back the recorded program. This recording medium may be disposed outside the video processing device and connected with the video processing device via the IP network or the like.

In the case where the recording medium is connected via an IP network indoors, a protocol such as UPnP (Universal Plug and Play) can be employed. As file attribute information for the UPnP protocol, UPnP AV CDS can be employed, for example.

Alternatively, it may be possible to receive a stream in the Video On Demand format from a recording medium disposed outdoors via an IP network or the like. In this case, the video processing device requests for a stream and receives the stream via a protocol such as HTTP and RTSP/RTP. In this case, file attribute information may be directly described in a multimedia script such as HTML and BML, which constitutes a menu screen and so on. Alternatively, file attribute information compliant with the ETSI TS 102 822 standard may be employed. Further alternatively, a playback control file or the like defined by the IPTV Forum STD-0002 VOD standard may be employed.

(6) In the above embodiments, 2D videos contained in a 3D program are each displayed twice successively.

Alternatively, an interpolation video frame may be generated by performing frame interpolation on two successive 2D video frames, and then a preceding one of the two successive 2D video frames, the generated interpolation video frame, and a subsequent one of the two successive 2D video frames may be displayed in this order. In this case, since inter-frame interpolation is performed, each video that is actually output delays by at least 1/120 sec.

According to the present modification, the frame buffer 104a has a region for storing at least two videos. The present modification differs in this point from the above embodiments. Furthermore, in order to display 2D videos contained in a 3D program, the video processing unit 161a relating to the present modification generates an interpolation video from two successive 2D videos stored in the frame buffer 104a, and writes the generated interpolation video into the R video buffer 174. Note that in the case where two successive 2D videos are not stored, each 2D video is displayed twice successively.

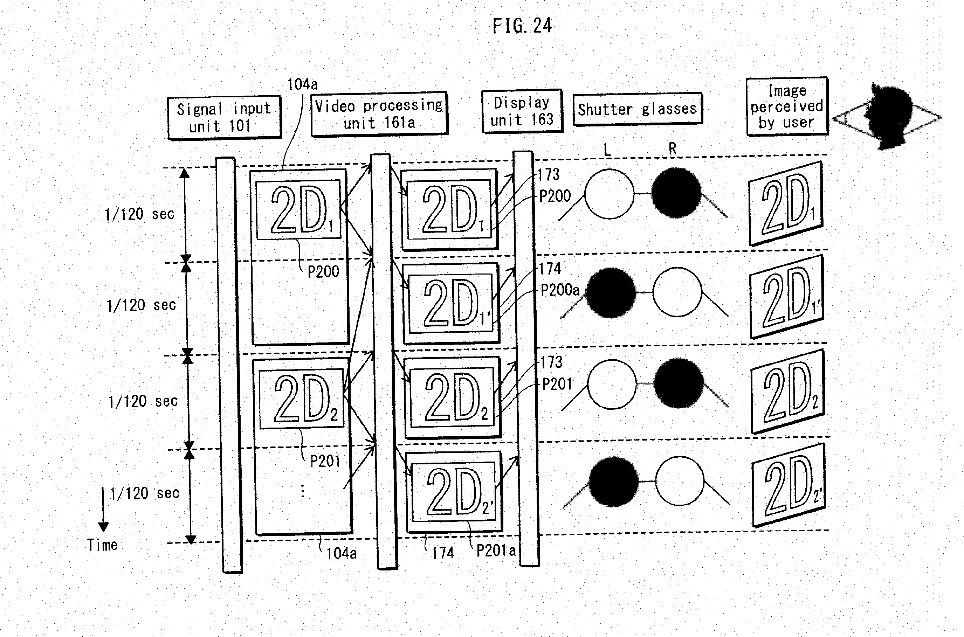

FIG. 24 shows a specific example of a mechanism for 2D video display relating to the present modification.

As shown in FIG. 24, the signal input unit 101 writes decoded 2D videos P200 and P201 into the frame buffer 104a.

The video processing unit 161a reads the 2D videos P200 and P201, which are stored in the frame buffer 104a, and writes the read 2D video P200 into the L video buffer 173 of the second buffer 172. Also, the video processing unit 161a performs inter-frame interpolation with use of the read 2D videos P200 and P201 to generate an interpolation video P200a, and writes the generated interpolation video P200a into the R video buffer 174.

For each 1/120 sec, the display unit 163 reads and displays the 2D video P200 and the interpolation video P200a from the L video buffer 173 and the R video buffer 174, respectively.

Here, the shutter glasses the viewer wears alternately close its shutter for right eye and shutter for left eye for each 1/120 sec. Despite this, videos transit smoothly because the display unit 163 displays the 2D video P200, the interpolation video P200a, and the 2D video P201 in this order. Accordingly, the viewer can view the videos without feeling uncomfortable with that each 2D video is displayed twice successively.

Note that while the 2D video P200 is displayed, the shutter glasses may stop opening and closing both the shutter for left eye and the shutter for right eye, that is, may keep open both the shutters. This causes the viewer to view an image having a light amount twice as much as a light amount of a 3D video. For this reason, the display unit 163 may automatically adjust a light amount for display.

(7) In the above embodiments, judgment is made as to whether a program is a 2D program or a 3D program based on information such as PSI and SI, which has been multiplexed with a video stream.

Alternatively, frames, which are each a 2D video frame contained in a 3D program, may each have 3D video information that directly contain information indicating that the frame is a 2D video frame contained in a 3D program.

Also, in the case where the frames are in the service compatible format as the 3D format, a 3D program flag may be employed instead, in accordance with whether a stream is a normal 2D stream or a 3D stream in the service compatible format. In the case where compression-coding compliant with the MPEG4|H.264 standard is performed for example, it is possible to judge whether a stream is a normal 2D stream (AVC) or a 3D stream (MVC) in the service compatible format, by referring to a value of profile_idc.

(8) In the above embodiments, judgment is made as to whether a program contained in a received video stream is a 2D program or a 3D program based on information such as PSI and SI, which has been multiplexed with a video stream.

Alternatively, the video processing device (digital TV) may have stored therein beforehand an EPG (Electronic Program Guide) composed of the SI or information in other format, and judge whether the program contained in the received video stream is a 2D program or a 3D program.

Further alternatively, the following structure may be employed. In the EPG, channels on which only 3D programs are broadcasted each have 3D broadcast information added thereto indicating that the channel is a channel on which only 3D programs are broadcasted. Before judging whether a program contained in a received video stream is a 2D program or a 3D program, the video processing device judges whether a channel on which the received video stream is to be broadcasted is a channel on which only 3D programs are broadcasted, based on the 3D broadcast information. If judging that the channel is a channel on which only 3D programs are broadcasted, the video processing device judges that the program contained in the received video stream is a 3D program. If the 3D broadcast information does not indicate that the channel is a channel on which only 3D programs are broadcasted, the video processing device judges whether the program is a 2D program or a 3D program based on the EPG.

Also, when detecting an ending time of a 3D program contained in a received video stream based on the EPG, the video processing device judges whether a program subsequent to the 3D program is a 2D program or a 3D program based on the EPG. If judging that the subsequent program is a 3D program, the video processing device does not switch the video output cycle. If judging that the subsequent program is a 2D program, the video processing device switches to the video output cycle for 2D videos.

(9) In the above third embodiment, the digital TV 2100 is a digital TV having a recording function.

Alternatively, the digital TV 2100 may not have the recording function and be equipped with a recording device having the recording function described in the third embodiment. In this case, the digital TV 2100 only needs to have a function of receiving broadcast waves, a function of receiving programs via the IP network, and a function relating to playback of programs recorded by the recording device.

(10) In the above fifth embodiment, upon receiving an instruction to switch a channel or an instruction to turn power on or off, the digital TV 4100 resets a history held in the history holding unit 4108, and re-starts judgment as to whether a program contained in a received video stream is a 2D program or a 3D program.

Alternatively, the digital TV may re-start judgment as to whether the program contained in the received video stream is a 2D program or a 3D program, without resetting the history held in the history holding unit, for example. In this case, upon receiving a predetermined number or more of successive 2D video frames contained in a received video stream, the digital TV (video processing device) judges that a program contained in the received video stream is a 2D program, and switches the output cycle from the output cycle for 3D videos to the output cycle for 2D videos. Note that the predetermined number used here may be equal to or different from the predetermined number used in the judgment as to whether a program is a 3D program described in the above fifth embodiment.

(11) In the above fifth embodiment, the predetermined number used in the judgment as to whether a program contained in a received video stream is a 2D program or a 3D program may be 1. In this case, upon receiving one 3D video frame, the digital TV immediately switches the output cycle.

(12) In the above fifth embodiment, if judging that a program contained in a received video stream is a 3D program, the digital TV stops subsequent judgment until a user operation is performed as a trigger for re-starting the judgment.

Alternatively, the digital TV may continue to make the judgment after judging that the program contained in the received video stream is a 3D program.

In this case, upon receiving a predetermined number of successive 2D videos after the program is judged to a 3D program by the program format judgment unit 4102, the output processing unit 4105 of the video processing device judges that the program is a 2D program, and switches the output cycle. Note that the predetermined number used here may be equal to or different from the predetermined number used in the judgment as to whether a program contained in a received video stream is a 3D program described in the above fifth embodiment, or may be one. In the case where the predetermined number is one, upon receiving one 2D video frame after the program is judged to a 2D program by the program format judgment unit 4102, the output processing unit 4105 of the video processing device immediately switches the output cycle.

(13) In the above embodiments, the plasma TV is used for description of switching between the output cycle for 2D videos and the output cycle for 3D videos.

Alternatively, the above art of switching between output cycles may be applied to an apparatus, which has a display device that spends a long time (a time longer than one video frame period) to switch between output cycles because of using a panel driving system for 2D video display and a panel driving system for 3D video display that are different from each other.

(14) In the above embodiments, the digital TV has all of the function of receiving broadcast waves, the function of receiving programs via the IP network, the function of acquiring programs from a recording medium and a playback device.

Alternatively, the digital TV may have at least one of the above functions.

(15) In the above embodiments, the frame buffer includes the first buffer and the second buffer (including the L video buffer and the R video buffer) that are physically different from each other.

Alternatively, the first buffer, the L video buffer, and the R video buffer may be physically shared, and used by time-sharing switching.

(16) In the above embodiments, the output cycle for 2D videos is 1/60 sec.

Alternatively, 2D videos may be output in other cycle such as 1/50 sec. In this case, the output cycle for 3D videos is half the output cycle for 2D videos such as 1/100 sec.

(17) In the above embodiments, in the case where a 3D program flag indicates that a program is a 3D program, PSI may additionally contain format information indicating which of the side-by-side format and the top-and-bottom format a 3D video frame is in.

In this case, the program format judgment unit outputs the format information to the video processing unit, and the video processing unit judges which of the formats the 3D program is in.

Accordingly, just one-time judgment can identify which of the formats the 3D program is in, compared with the judgment made by the frame format judgment unit as to which format each frame is in. For example, if the frame format judgment judges that the 3D program is in the side-by-side format, it is unnecessary to load a program for dividing each frame in the top-and-bottom format into an L video and an R video.

(18) In the above embodiments, the video processing device may include a graphics generation unit for generating a graphics and superimposing the generated graphics on videos.

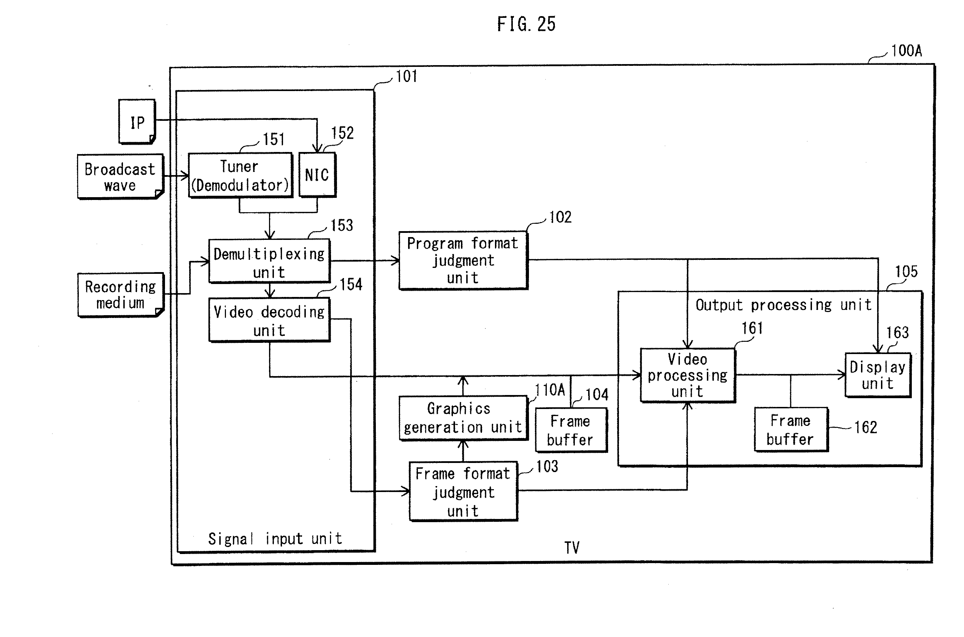

FIG. 25 is a block diagram showing the structure of the digital TV 100A relating to the first embodiment that includes a graphics generation unit 110A.

The graphics generation unit 110A receives, from the frame format judgment unit 103, a result of judgment as to whether each frame is a 2D video frame or a 3D video frame, and type of frame format if the frame is judged to a 3D video frame.

The graphics generation unit 110A superimposes the generated graphics on the frames, based on the result of judgment received from the frame format judgment unit 103.

Specifically, if the result of judgment indicates that the frame is a 2D video frame, the graphics generation unit 110A determines a position within the frame on which the graphics is to be superimposed, and superimposes the graphics on the determined position. Then, the graphics generation unit 110A writes the frame on which the graphics has been superimposed into the frame buffer 104. If the result of judgment indicates that the frame is a 3D video frame, the graphics generation unit 110A determines a position within a region of the frame where an L image is stored, as a position (x) on which the graphics is to be superimposed. Then, based on the determined position (x), the graphics generation unit 110A determines a position within a region of the frame where an R image is stored, as a position (y) on which the graphics is to be superimposed. The position (y) is calculated by y = x + (half the number of pixels of each frame in the horizontal direction). For example, in the case where each frame is composed of 1920 pixels in the horizontal direction, the position (y) is calculated by y = x + 960.

In the present modification, the position (x) for the L video and the position (y) for the R video in the 3D frame on which the graphics is to be superimposed correspond with each other. Alternatively, the position (y) may be moved right or left from the position (x) by at least one pixel, for example.

Also, in the present modification, a graphics is superimposed on each frame before the frame is stored in the frame buffer 104. Alternatively, a graphics is superimposed on each frame before the frame is stored in the frame buffer 162 of the output processing unit 105. Here, a position within a video stored in L the video buffer 173 and a position within a video stored in the R video buffer 174 on which the graphics is to be superimposed may correspond with each other. Alternatively, the position within the video stored in the R video buffer 174 may be moved right or left from the position within the video stored in L the video buffer 173.

(19) In the above second embodiment, 3D video information is added to HDMI information. Specifically, the 3D video information may be stored in one of tables constituting the HDMI information, which is commonly shared by manufactures of the video processing device. Alternatively, the 3D video information may be stored in an individual table permitted for each manufacture. Also, in the case where the 3D video information is stored the individual table, the individual table may be output to the digital TV 1100 via an HDMI cable, via a signal line for outputting the commonly shared table or other signal line.

(20) The methods described in the above embodiments may be realized by storing a program containing the procedures of the methods in a memory, reading the program from the memory by a CPU (Central Processing Unit) or the like, and executing the read program.

Alternatively, the above methods may be realized by storing the program containing the procedures in recording media, and distributing the recording media.

(21) The structural elements relating to the above embodiments each may be realized as an LSI (Large Scale Integration) that is an integrated circuit. These structural elements may be separately integrated into one chip, or integrated into one chip including part or all of the structural elements. Although the expression "LSI" is used here, the LSI may be called an IC (Integrated Circuit), a system LSI, a super LSI, or an ultra LSI, depending on the integration degree. Also, a method of forming integrated circuits is not limited to LSIs, and may be realized using a dedicated circuit or a general-purpose processor. Furthermore, it may be possible to use an FPGA (Field Programmable Gate Array) programmable after manufacturing LSIs or a reconfigurable processor in which connection and setting of a circuit cell inside an LSI can be reconfigured. Alternatively, the functional blocks may be calculated with use of a DSP (Digital Signal Processor), a CPU, or the like. Further alternatively, these processing steps may be recorded in a recording medium as a program, and the program may be executed.

Furthermore, when a new technology for forming integrated circuits that replaces LSIs becomes available as a result of progress in semiconductor technology or semiconductor-derived technologies, the functional blocks may be integrated using such technology. One possibility lies in adaptation of biotechnology.

(22) The present invention may be any combination of the above embodiments and modifications.

### [Industrial Applicability]

The video processing device described above is useful for displaying both 2D videos and 3D videos.

### [Reference Signs List]

- 100: digital TV
- 101: signal input unit
- 102: program format judgment unit
- 103: frame format judgment unit
- 104: frame buffer
- 105: output processing unit
- 151: tuner
- 152: NIC
- 153: demultiplexing unit
- 154: video decoding unit
- 161: video processing unit
- 162: frame buffer
- 163: display unit
- 171: first buffer
- 172: second buffer
- 173: L video buffer
- 174: R video buffer
- 181: switch
- 182: display
- 183: switching control unit

## Claims

1. A video processing device comprising:
a reception unit operable to receive a video stream that contains video frames, the video frames including 2D video frames for a 2D video and/or 3D video frames for a 3D video;
a program judgment unit operable to make a judgment as to whether the video stream received by the reception unit contains a 2D program that is entirely constituted by 2D videos or a 3D program that is at least partially constituted by a 3D video; and
an output unit operable, when the program judgment unit judges that the video stream contains the 3D program, to output the 2D video frames contained therein in a 3D video output format for 3D videos, and when the program judgment unit judges that the video stream contains the 2D program, to output the 2D video frames contained therein in a 2D video output format for 2D videos.

2. The video processing device of Claim 1, wherein
the reception unit further receives additional information that is associated with the video stream and indicates whether the video stream contains the 2D program or the 3D program, and
the program judgment unit makes the judgment based on the additional information.

3. The video processing device of Claim 1, wherein
if a predetermined number of 3D video frames are successively received, the program judgment unit judges that the video stream contains the 3D program, and
if the predetermined number of 3D video frames are not successively received, the program judgment unit judges that video stream contains the 2D program.

4. The video processing device of Claim 3, wherein
if channel switching occurs while the output unit outputs the video frames in the 3D video output format and then the predetermined number of 2D video frames are successively received, the program judgment unit judges to switch from the 3D video output format to the 2D video output format, and the output unit switches from the 3D video output format to the 2D video output format.

5. The video processing device of Claim 1, wherein
each of the video frames contains an identifier for identifying whether the video frame is a 2D video frame or a 3D video frame,
the video processing device further comprises
a frame judgment unit operable to judge whether each of the video frames is a 2D video frame or a 3D video frame based on the identifier contained therein, and
if the program judgment unit judges that the video stream contains the 3D program and the frame judgment unit judges that each of the video frames contained therein is a 2D video frame, the output unit outputs the 2D video frame in the 3D video output format.

6. The video processing device of Claim 1, further comprising
a storage unit that stores therein an electronic program guide in which 3D programs each have program information added thereto for identifying the 3D program, and
the program judgment unit identifies a channel on which the video stream has been broadcasted, and makes the judgment based on the identified channel, a current time, and the electronic program guide.

7. The video processing device of Claim 6, wherein
in the electronic program guide, broadcast stations for broadcasting only 3D programs each have broadcast information added thereto for identifying that the broadcast station is a broadcast station for broadcasting only 3D programs,
before making the judgment, the program judgment unit judges whether a broadcast station that has received the video stream on the identified channel is a broadcast station for broadcasting only 3D programs based on broadcast information added to the broadcast station, and
if the program judgment unit judges that the broadcast station is a broadcast station for broadcasting only 3D programs, the output unit outputs the 2D video frames contained in the 3D program in the 3D video output format.

8. The video processing device of Claim 6, wherein
if the program judgment unit detects an ending time of the 3D program based on the electronic program guide while the output unit outputs the video frames contained therein in the 3D video output format, the program judgment unit judges whether a program subsequent to the 3D program is a 2D program or a 3D program, and
if the program judgment unit judges that the subsequent program is a 3D program, the output unit outputs a received 2D video frame in the 3D video output format continuously after the ending time of the 3D program without switching to the 2D video output format, and
if the program judgment unit judges that the subsequent program is a 2D program, the output unit switches from the 3D video output format to the 2D video output format after the ending time of the 3D program, and outputs the 2D video frame in the 2D video output format.

9. The video processing device of Claim I, wherein
an output cycle of the 3D video output format is half an output cycle of the 2D video output format, and
the output unit outputs each of the 2D video frames twice successively in each output cycle of the 3D video output format.

10. The video processing device of Claim 1, wherein
an output cycle of the 3D video output format is half an output cycle of the 2D video output format, and
the video processing device further comprises
a video processing unit operable, when two 2D video frames are successively received, to generate an interpolation video frame from the two 2D video frames, as an intermediate video frame between the two 2D video frames, and
the output unit successively outputs a preceding one of the two 2D video frames, the generated interpolation video frame, and a subsequent one of the two 2D video frames in this order in the output cycle of the 3D video output format.

11. A video processing method comprising:
a reception step of receiving a video stream that contains video frames, the video frames including 2D video frames for a 2D video and/or 3D video frames for a 3D video;
a program judgment step of making a judgment as to whether the video stream received in the reception step contains a 2D program that is entirely constituted by 2D videos or a 3D program that is at least partially constituted by a 3D video; and
an output step of, when the program judgment step judges that the video stream contains the 3D program, outputting the 2D video frames contained therein in a 3D video output format for 3D videos, and when the program judgment step judges that the video stream contains the 2D program, outputting the 2D video frames contained therein in a 2D video output format for 2D videos.

12. A computer program for use in a video processing device, causing the video processing device to execute steps of:
a reception step of receiving a video stream that contains video frames, the video frames including 2D video frames for a 2D video and/or 3D video frames for a 3D video;
a program judgment step of making a judgment as to whether the video stream received in the reception step contains a 2D program that is entirely constituted by 2D videos or a 3D program that is at least partially constituted by a 3D video; and
an output step of, when the program judgment step judges that the video stream contains the 3D program, outputting the 2D video frames contained therein in a 3D video output format for 3D videos, and when the program judgment step judges that the video stream contains the 2D program, outputting the 2D video frames contained therein in a 2D video output format for 2D videos.
